# EUROPEAN PATENT SPECIFICATION

(11) **EP 3 463 932 B1**
(45) Date of publication and mention of the grant of the patent: **05.08.2020**
(21) Application number: 17758946.2
(22) Date of filing: 05.06.2017
(51) Int. Cl.: B60C 9/20, B60C 9/28, B60C 9/22, B60C 9/18

(54) **TYRE FOR HEAVY LOAD VEHICLE WHEELS**
REIFEN FÜR SCHWERLASTFAHRZEUGRÄDER
PNEU POUR ROUES DE VÉHICULES DE TRANSPORT LOURDS

(30) Priority: 03.06.2016 IT UA20164074
(43) Date of publication of application: 10.04.2019
(73) Proprietor: Pirelli Tyre S.p.A., 20126 Milano (IT)
(72) Inventor: MINOLI, Claudio, I-20126 Milano (IT); PIZZORNO, Tommaso, I-20126 Milano (IT); RAIA, Ciro, I-20126 Milano (IT); LORENZETTI, Daniele, I-20126 Milano (IT)
(74) Representative: Porta & Consulenti Associati S.p.A.
(86) International application number: PCT/IB2017/053312
(87) International publication number: WO 2017/208214

(56) References cited:
- DE-A1-102010 016 550
- US-A- 4 989 659
- US-A1- 2008 000 566

## Description

### FIELD OF THE INVENTION

The present invention relates to a tyre for vehicle wheels, in particular for wheels of heavy load vehicles, such as trucks, buses, trailers and, in general, for vehicle wheels wherein the tyre is subjected to a high load. These can also include light transport vehicles (so-called "light truck").

As is known, a tyre usually comprises a carcass structure having a substantially toroidal shape, having opposite lateral edges associated to respective right and left bead structures; a belt structure applied at a radially outer position with respect to the carcass structure; a tread band radially superimposed on the belt structure and a pair of sidewalls laterally applied on opposite sides with respect to the carcass structure.

### RELATED ART

The patent CN 102358110 discloses a radial tyre, in particular a radial tyre that uses a belt structure made by spirally winding steel cords and a method for making the same. Such a radial tyre comprises a tread band, a belt and a sidewall.

The belt structure consists as a whole of four belts: a first belt applied at a radially inner position as a transition layer, a second and a third belt sequentially disposed on the first belt, and a fourth belt arranged on the third belt.

The first belt includes in turn a central belt strip and two belt strips symmetrically arranged at an axially outer position with respect to the central belt strip and each formed by a cord fabric spirally wound according to the circumference of the tyre.

According to CN 102358110, such a belt structure made with steel cords would effectively limit the deformation of the tyre shoulder, would optimize the stress distribution of the belt and the pressure distribution under the ground contacting area of the tread band, would improve service life, wear resistance and loading capacity, and would reduce fuel consumption.

The patent application DE 10 2010 016 550 discloses a tyre for vehicles having a carcass, a belt radially built around the carcass and a tread band built on the belt, wherein the belt is formed by at least three belt strips superimposed to each other.

The radially inner and the radially outer strips are so-called working plies with reinforcing elements made of steel parallel to one another and incorporated in rubber. The reinforcing elements of the radially inner strip are inclined at an angle between 10° and 45° with respect to the circumferential direction and the reinforcing elements of the radially outer strip form an angle between 10° and 45° but with an opposite inclination with respect to the circumferential direction.

The belt strip arranged between the two working plies is formed in three parts along the axial direction of the tyre with a central belt portion and two belt portions symmetrically arranged at an axially outer position with respect to the central belt portion and each including reinforcing elements inclined at an angle of from 0° and 5° with respect to the circumferential direction.

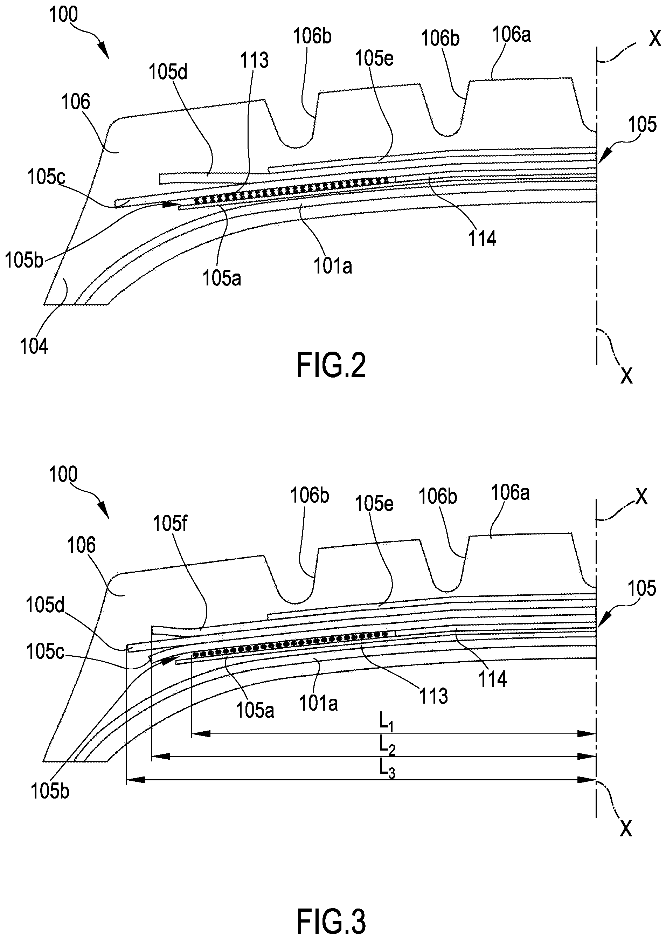

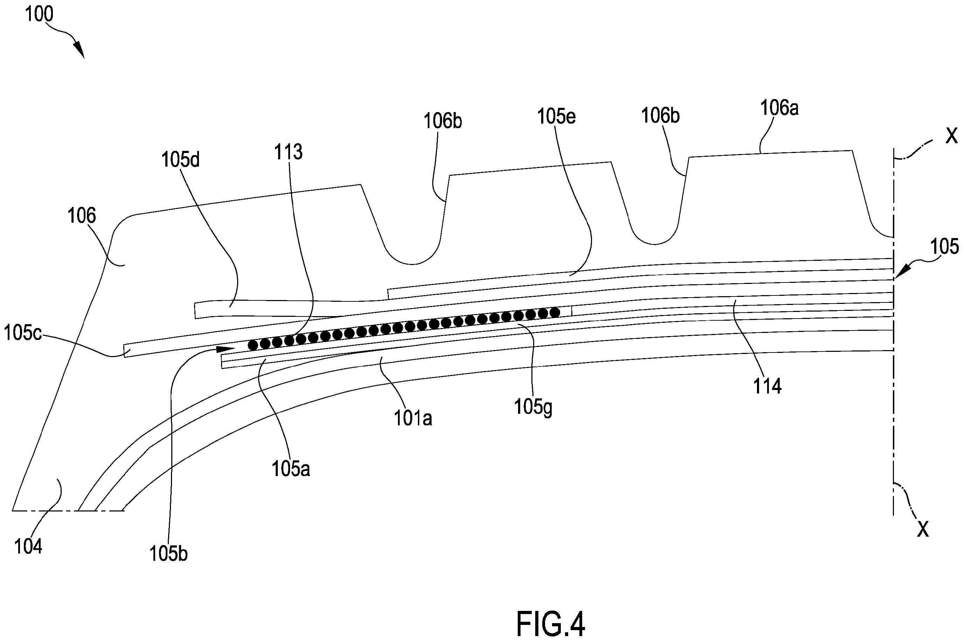

In one embodiment, illustrated in figures 3 and 4, the tyre can comprise a further belt strip positioned on the aforementioned radially outer strip and incorporating reinforcing elements made of steel parallel to one another and inclined at an angle of from 5° and 90° with respect to the circumferential direction.

### SUMMARY OF THE INVENTION

A tyre for light or heavy load vehicle wheels, such as trucks, buses, trailers or similar is typically subjected to particularly demanding conditions of use which, due to the thermal-mechanical stresses exerted on the belt structure of the tyre, can trigger micro-lacerations which, upon propagation, reduce the service life thereof and/or prevent its reconstruction.

In this regard, the belt structure can exert a major influence both on the tyre performance (for example in terms of steering responsiveness and directional stability) and on its service life, in particular on the speed of wear and on the wear uniformity of the tread band. For example, an irregular wear of the tread band has a negative impact on the driving behaviour of the tyre, increasing the vibrations and causing continuous deviations of the vehicle from its trajectory.

In particular, the axially outer ends of the belt layers move, changing their angle and position due to the movements generated by the deformations deriving from the forces acting on the tyre, for example when a section thereof enters or leaves the ground contacting area.

These movements of the axially outer ends of the belt layers impart in turn to the elastomeric material which forms the layers and to the elastomeric material of the adjacent areas deformations which are the cause of great strains and temperature increases due to the dissipative effects of the elastomeric material itself.

Such deformations trigger in turn fatigue phenomena in the elastomeric material that lead to a propagation of the aforementioned lacerations and subsequently to a possible breaking of the tyre.

The fatigue phenomena are accelerated as the temperatures increase both due to the degradation of the strength characteristics of the materials which constitute the tyre, and due to oxidation phenomena of such materials.

In this regard, the Applicant has observed that the amplitude of the deformation cycles and the temperatures which the belt structure is subjected to essentially depend on two factors: by the amount of the lateral and vertical forces, influenced in turn by the load transfers during manoeuvring, and by the rolling speed of the tyre which has an impact on the amount of the centrifugal forces and on the number of rolling cycles which the tyre is subjected to per unit time and which influences in turn the heat exchange with the outside environment.

For example, a vehicle that travels along a certain route with the same load will stress the tyres in a way that is proportional to its speed.

In recent times, the evolution of the vehicles, of road networks and of transport requirements has led to an increasingly stringent market demand of tyres for light and/or heavy load vehicles that are able to withstand a much greater number of rolling/stress cycles with respect to the past.

This is due, on the one hand, to the increase in the average travel speeds and, on the other hand, to a constant increase in the amount of transported goods, deriving from the market demand to reduce logistical transport costs, an increase that has led to an increase of the load indices of the tyres and thus of the weight that each tyre must support.

In addition, the tyre is required to have a belt structure that is sufficiently strong to allow one or more reconstructions of the tread band during the service life of the tyre.

The Applicant has found that it is advantageously possible to achieve an increase in the service life of a tyre for light and/or heavy load vehicles even in the demanding operating conditions deriving from the aforementioned increase of the load indices of the tyre thanks to a suitable configuration of the radially innermost layers of the belt structure.

The Applicant has in particular found that this increase in service life can be achieved by equipping the belt structure with three radially inner layers configured as follows:
- a first belt layer applied at a radially outer position with respect to the carcass structure and incorporating reinforcing elements oriented in one or more directions;
- a second belt layer applied on the aforementioned at least a first belt layer and comprising, preferably consisting of, at least a central belt layer incorporating reinforcing elements oriented in one or more directions and at least a pair of lateral reinforcing layers arranged substantially symmetrically with respect to the equatorial plane of the tyre and positioned at axially outer ends of the second belt layer, the lateral reinforcing layers incorporating reinforcing elements oriented along a substantially circumferential direction (also defined in the present document as "0° direction"); and
- a sheet of elastomeric material arranged between said first and second belt layers.

In a first aspect thereof, the present invention therefore refers to a tyre for vehicle wheels as defined in the attached claim 1.

The Applicant has also found that this increase in service life can be achieved by equipping the belt structure with radially inner layers configured as follows:
- at least a first belt layer applied at a radially outer position with respect to the carcass structure and incorporating reinforcing elements made of non-metallic material oriented in one or more directions; and
- a second belt layer applied on the aforementioned at least a first belt layer and configured as disclosed above.

In a second aspect thereof, therefore, the present invention also refers to a tyre for vehicle wheels as defined in the attached claim 2.

The Applicant has found that the radially innermost layers of the belt structure configured as indicated above, synergistically cooperate to reduce both the amplitudes of the fatigue cycles of the reinforcing elements positioned at the tyre circumference, amplitudes proportional to the growth rate of the fatigue cracks, and the strains of the reinforcing elements at the axially outer ends of the belt layers of the belt structure, strains which are proportional in turn to the deformations imposed to the elastomeric material in contact with the same belt layers.

More specifically, the Applicant has found that the aforementioned configurations of the radially innermost layers of the belt structure are particularly effective in reducing the strains of the reinforcing elements at the axially outer ends of the belt layers applied at a radially outer position with respect thereto.

The Applicant has experimentally observed that the aforementioned configurations of the radially innermost layers of the belt structure allow to achieve an advantageous increase in the service life of the tyre also in the demanding operating conditions such as those mentioned above.

Without wishing to be bound to any interpretative theory, the Applicant believes that this advantageous technical effect is achieved thanks to the aforementioned strain reduction of the axially outermost reinforcing elements of the belt layers and of the deformations imposed to the elastomeric material in contact with the axially outermost portions of the belt layers, parameters which both contribute to the heat generation due to dissipative effects of the elastomeric material.

Again without wishing to be bound to any interpretative theory, the Applicant believes that the aforementioned advantageous technical effect of an increase in the service life of the tyre is in particular achieved thanks to the synergistic cooperation between the radially innermost layers of the belt structure.

Firstly, thanks to the fact that the aforementioned first belt layer - whatever the nature, metallic or non-metallic - of the material which the reinforcing elements incorporated therein are made of - distributes the deformations which are generated in the elastomeric material between the belt structure and the underlying carcass structure.

In this regard, the Applicant has in particular verified that the reinforcing elements made of non-metallic material of the first belt layer of the tyre according to the aforementioned second aspect of the invention are advantageously capable of imparting to the first belt layer mechanical characteristics which make it suitable to effectively exert the aforementioned function of distributing the deformations which are generated between the belt structure, which this first layer belongs to, and the underlying carcass structure.

Secondly, the Applicant believes that the aforementioned advantageous technical effect of an increase in the service life of the tyre is achieved thanks to the fact that - when present - the aforementioned sheet of elastomeric material arranged between the first and the second belt layer separates these two belt layers reducing the stresses which are generated therebetween in operation and related to a different orientation of the respective reinforcing elements.

Thirdly, the Applicant believes that the aforementioned advantageous technical effect of an increase in the service life of the tyre is achieved thanks to the fact that the aforementioned second belt layer acts in the sense of reducing the amplitude of the deformation cycles in the elastomeric material adjacent to the axial ends of the third belt layer and of the fourth belt layer and in the sense of reducing the strain level of the axially outermost reinforcing elements present in the third and in the fourth belt layer.

In particular, the Applicant believes that the central belt layer of the second belt layer achieves the advantageous technical effects of:
i) improving the geometry of the belt structure, and of
ii) contributing to absorb part of the load directed to the radially outermost belt layers reducing both the loads and therefore the stresses thereof, and the deformations induced in the elastomeric material which incorporates the reinforcing elements of the same belt layers.

The Applicant also deems that the lateral reinforcing layers of the second belt layer provided with reinforcing elements oriented along a substantially circumferential direction achieve the advantageous technical effect of reducing the stresses of the belt layers applied at a radially outer position with respect to the second belt layer, both by limiting the stresses between the various belt layers, and by absorbing part of the load that would otherwise be exerted on the radially outermost belt layers.

The Applicant has in particular experimentally observed that both the strains of the reinforcing elements, and the deformations imposed on the elastomeric material in contact with the belt layers of the belt structure of the tyre according to the invention are much lower than those observed with a belt structure configuration according to the teachings of CN 102358110 and of DE 10 2010 016 550.

The Applicant has also experimentally observed that the aforementioned configurations according to the invention of the radially innermost layers of the belt structure allow to achieve an advantageous improvement of the stress resistance and of the strength of the belt structure as a whole, thereby increasing the characteristics of reconstructability of the tyre, an aspect particularly sought after by those in the field.

### Definitions

In the present description and in the subsequent claims, the following definitions apply.

The expression "tyre for light and/or heavy load vehicle wheels" is meant to indicate a tyre intended to be used in a vehicle belonging to categories M2, M3, N2, N3 and 02-04, according to the *"ECE Consolidated Resolution of the Construction of vehicles (R.E. 3), Annex 7, Classification and definition of power driven vehicles and trailers",* or to categories M3, N2, N3, O3, O4 according to the "ETRTO Engineering design information" (2010 edition), "General Information" section, pages G15 and G16, chapter "International codes for wheeled vehicle classification as UN/ECE 29/78 and Directive 2003/37*".*

The term "belt layer applied on" another element of the tyre, for example the carcass structure or an underlying belt layer of the belt structure, is meant to indicate that the belt layer at radially outer position is either directly applied on the underlying layer without interposition of any material or applied through interposition of a sheet of elastomeric material substantially free from reinforcing elements configured to impart a detectable effect on the stress distribution on the belt layers at a radially outermost position of the belt layer considered.

The term "equatorial plane" of the tyre is meant to indicate a plane perpendicular to the rotation axis of the tyre and which subdivides the tyre into two symmetrically equal parts.

The terms "radial" and "axial" and the expressions "radially inner/outer" and "axially inner/outer" are used with reference, respectively, to a direction perpendicular and a direction parallel to the rotation axis of the tyre.

The terms "circumferential" and "circumferentially" are, on the other hand, used with reference to the direction of annular development of the tyre, i.e. to the rolling direction of the tyre, which corresponds to a direction lying on a plane coinciding with or parallel to the equatorial plane of the tyre.

The term "elastomeric material" is meant to indicate a composition comprising at least one elastomeric polymer and at least one reinforcing filler. Preferably, such a composition also comprises additives such as, for example, a cross-linking agent and/or a plasticizer. Thanks to the presence of the cross-linking agent, such a material can be cross-linked by means of heating.

The terms "cord" or "reinforcing cord" are meant to indicate an element consisting of one or more wire-like elements (hereinafter also called "wires") incorporated in a matrix of elastomeric material. Depending upon the circumstances and the specific applications, the aforementioned wire-like elements can be made of textile and/or metallic material.

The term "reinforcing elements oriented along a substantially circumferential direction" is meant to indicate that the reinforcing elements form an angle of few degrees (for example an angle of from about 0° to 6°) with respect to the equatorial plane of the tyre.

The term "diameter" or "thickness" of a cord or wire is meant to indicate the thickness of these elements measured as prescribed by the BISFA method E10 (The International Bureau For The Standardization Of Man-Made Fibres, Internationally Agreed Methods For Testing Steel Tyre Cords, 1995 edition).

The cross-section area of a cord is calculated geometrically by multiplying the number of wires which form the same by the geometric section of each wire, for example in the case of identical wires A= n_{wires}^{∗}d^{2∗}τ/4 where A is the cross-sectional area of the cord, n_{wires} is the number of wires which form the cord, d is the diameter of the wire and π is the constant pi.

The expression "elongation at break" of a reinforcing cord or wire is meant to indicate the percentage elongation at which breaking occurs, evaluated with the BISFA method E6 (The International Bureau For The Standardization Of Man-Made Fibres, Internationally Agreed Methods For Testing Steel Tyre Cords, 1995 edition) set up for the specific material.

The expression "linear density" of a reinforcing cord or wire is meant to indicate the mass per unit length evaluated with the BISFA method set up for the specific material.

Within the framework of the present description and in the subsequent claims, the aforementioned characteristics of the reinforcing cords or wires are meant to be determined on flat yarns, without torsions applied during testing, according to the tests regulated by BISFA.

In particular:
- for reinforcing cords or wires made of aramid material (AR): BISFA - Testing methods for yarns made of para-aramid fibres 2002 edition
   Determination of the linear density: Chapter 6
   Determination of the tensile properties: Chapter 7 - Testing procedure: Paragraph 7.5 with initial pre-tensioning procedure
   Tractions carried out with Zwick - Roell dynamometer Z010
- for reinforcing cords or wires made of polyester (PET): BISFA - Testing methods for polyester yarns - 2004 edition
   Determination of the tensile properties: Chapter 7 - Procedure A - Preparation of laboratory samples: Preparation of samples under relaxation - paragraph 7.4.1.1 => preparation of samples on collapsible reel
   Preparation of laboratory samples and performance of the test: Manual test - paragraph 7.5.2.1 => c)
   Start procedure => e) pretension at start of procedure
   Tractions carried out with Zwick - Roell dynamometer Z010
- for reinforcing cords or wires made of polyamide, for example Nylon (NY): BISFA - Testing methods for polyamide yarns - 2004 edition
   Determination of the tensile properties: Chapter 7 - Procedure A - Preparation of laboratory samples: Preparation of samples under relaxation - paragraph 7.4.1.1 => preparation of samples on collapsible reel
   Preparation of laboratory samples and performance of the test: Manual test - paragraph 7.5.2.1 => c)
   Start procedure => e) pretension at start of procedure
   Tractions carried out with Zwick - Roell dynamometer Z010
- for reinforcing cords or wires made of cellulose material: BISFA - Testing methods for yarns made of viscose fibre, cuprammonium rayon, acetates, triacetates and lyocell - 2007 edition
   Determination of the tensile properties: Chapter 7 - Conditions of the tension test: Oven dry test - Table 7.1- Test procedure - Paragraph 7.5 - with test on samples under relaxation in an oven in dry conditions - sub-paragraph 7.5.2.4
- for reinforcing cords or wires made of steel: BISFA E6, BISFA E7 and BISFA E10

For the purposes of the present description and of the following claims, the expression "height of the cross-section" refers to the radial distance from the diameter of the nominal rim to the outer diameter of the tyre at its equatorial plane.

For the purposes of the present description and of the following claims, the expression "width of the cross-section" refers to the maximum linear distance parallel to the axis of the tyre and between the outer portion of its sidewalls.

Said "height of the cross-section" and said "width of the cross-section" can be indicated for example according to the ETRTO standard.

The present invention can have one or more of the preferred features given below.

The tyre according to the aforementioned first and second aspect of the invention is for example adapted for equipping light and/or heavy load vehicles both on directional axes and traction axes.

Merely as an example, the tyre can have the following sizes: 275/70 R 22.5; 295/80 R 22.5; 315/80 R 22.5; 315/70 R22.5; 265/70 R 19.5; 285/70 R 19.5; 215/75 R 17.5; 225/75 R 17.5; 235/75 R 17.5; 245/70 R 17.5; 245/70 R 19.5; 305/70 R 19.5.

In a preferred embodiment, the tyre can be a "super single wide base" tyre for heavy load vehicles.

For the purposes of the present description and of the following claims, the expression "super single wide base tyre for heavy load vehicles" refers to a tyre that replaces the tyres mounted in a pair on a specific axle with a cross-section width that exceeds the cross-section width of one of the previous tyres mounted in a pair, but less than the width of the pair set.

Said "super single wide base tyre for heavy load vehicles" usually has a width of the cross-section (W) greater than or equal to 350 mm, preferably from 380 mm to 500 mm and an aspect ratio [(H/W)×100] defined as the ratio between the height of the cross-section of the tyre (H) and the width of the cross-section of the tyre (W) multiplied by 100, less than or equal to 80, preferably from 30 to 70.

In such an embodiment, the tyre can for example have the following sizes: 435/50 R 19.5; 445/45 R 19.5; 385/65 R 22.5; 385/55 R 22.5.

In the tyre according to the aforementioned first aspect of the invention, the filaments of the cords or the wires used as reinforcing elements of the various belt layers of the tyre can be made of metallic or non-metallic material.

In the tyre according to the aforementioned second aspect of the invention, the filaments of the cords or the wires used as reinforcing elements of the various belt layers of the tyre can be made of metallic or non-metallic material with the exception of the first belt layer wherein the reinforcing elements are, as outlined above, made of non-metallic material.

Preferably, the filaments of the cords or the wires made of metallic material are made of a material selected from NT (normal tensile), HT (high tensile), ST (super tensile) or UT (ultra tensile) steel depending on the applications.

In a preferred embodiment, such steel filaments have a carbon content of less than about 1%.

Preferably, the carbon content is greater than or equal to about 0.7%, even more preferably the carbon content is of from about 0.7% to about 0.9%.

In a preferred embodiment, the filaments are coated with brass or other corrosion-resistant coating (for example Zn/Mn).

The term wire made of NT steel "Normal Tensile Steel" is meant to indicate a carbon steel wire having an ultimate tensile strength of about 2800 ± 200 MPa, for example having an ultimate tensile strength of at least about 2700 MPa for a wire diameter of 0.28 mm.

The term wire made of HT steel "High Tensile Steel" is meant to indicate a carbon steel wire having an ultimate tensile strength of about 3200 ± 200 MPa, for example an ultimate tensile strength of at least about 3100 MPa for a wire diameter of 0.28 mm.

The term wire made of ST steel "Super Tensile Steel" is meant to indicate a carbon steel wire having an ultimate tensile strength of about 3500 ± 200 MPa, for example an ultimate tensile strength of at least about 3400 MPa for a wire diameter of 0.28 mm.

The term wire made of UT steel "Ultra Tensile Steel" is meant to indicate a carbon steel wire having an ultimate tensile strength of about 3900 ± 200 MPa, for example an ultimate tensile strength of at least about 3800 MPa for a wire diameter of 0.28 mm.

The tolerances ± 200 MPa are indicated to encompass, for each class of steel, the minimum and maximum tensile strength values due to the various wire diameters (the value of the tensile strength is typically inversely proportional to the wire diameter), for example for wire diameters of from about 0.12 mm to about 0.40 mm.

The preferred characteristics outlined above in relation to the filaments of the metallic cords also apply to the metallic reinforcing wires possibly used as reinforcing elements in the belt layers.

In a preferred embodiment, the aforementioned at least a first belt layer is applied on the carcass structure.

In the tyre according to the aforementioned first aspect of the invention, the reinforcing elements of the first belt layer are preferably selected from: cords made of non-metallic material or metallic material, optionally coated by an elastomeric material; wires made of non-metallic material or wires made of metallic material, optionally coated by an elastomeric material; one or more fabric structures formed by (weft and warp) wires made of metallic or non-metallic material; fibrillated fibres made of a non-metallic reinforcing material; and combinations thereof.

Also in this case and similarly to what has been outlined above in relation to the tyre according to the aforementioned second aspect of the invention, the Applicant has verified that these preferred reinforcing elements are advantageously capable of imparting to the first belt layer mechanical characteristics which allow the first belt layer to effectively perform the aforementioned function of distributing the deformations that are generated between the belt structure, which this first layer belongs to, and the underlying carcass structure.

In a preferred embodiment, the reinforcing elements of the first belt layer of the tyre according to the aforementioned first aspect of the invention comprise a plurality of cords or wires made of metallic or non-metallic material, substantially parallel to one another and inclined with respect to the equatorial plane of the tyre.

In a preferred embodiment and similarly to what has just been outlined in relation to the tyre according to the aforementioned first aspect of the invention, also the reinforcing elements of the first belt layer of the tyre according to the aforementioned second aspect of the invention comprise a plurality of cords or wires made of non-metallic material, substantially parallel to one another and inclined with respect to the equatorial plane of the tyre.

In this preferred embodiment of the invention, the first belt layer can be made by applying one or more strips made of elastomeric material including the aforementioned plurality of cords or wires made of metallic or non-metallic material on the carcass structure.

In a further preferred embodiment of the invention, the reinforcing elements of the first belt layer comprise one or more fabric structures including weft wires and warp wires, made of metallic or non-metallic material in the case of the tyre according to the first aspect of the invention, or rather of non-metallic material in the case of the tyre according to the second aspect of the invention, substantially inclined with respect to the equatorial plane of the tyre.

In this preferred embodiment, the first belt layer can be made by applying one or more strips made of elastomeric material including the aforementioned one or more fabric structures on the carcass structure.

The Applicant has in particular verified that this configuration with reinforcing elements (cords or wires) inclined with respect to the equatorial plane of the tyre allows to increase the desired technical effect of distributing the deformations that are generated between the belt structure, which this first layer belongs to, and the underlying carcass structure.

Preferably, the aforementioned cords or wires made of metallic or non-metallic material, including the weft wires and the warp wires made of the aforementioned one or more fabric structures, form an angle of from 20° to 60°, even more preferably of from 30° to 50° with respect to the equatorial plane of the tyre.

The Applicant has in particular verified that this preferred inclination of the reinforcing elements (cords or wires) allows to maximize the desired technical effect of distributing the deformations that are generated between the belt structure, which this first layer belongs to, and the underlying carcass structure.

Preferably, the aforementioned cords or wires made of non-metallic material, including the weft wires and the warp wires made of the aforementioned one or more fabric structures, have a count of from 400 to 1400 dtex and, more preferably, of from 450 to 1200 dtex.

In this way, it is advantageously possible to achieve an optimal compromise between the strength and the weight of the aforementioned one or more fabric structures.

In a preferred embodiment, the weft wires and the warp wires of the aforementioned one or more fabric structures, each have a density, expressed as number of wires per transversal decimetre of the fabric extension (epdm), of from 40 to 120 wires/dm and, more preferably, of from 50 to 100 wires/dm.

The Applicant has in particular verified that when fabric structures are used to reinforce the first belt layer this preferred density of the weft and warp wires allows to optimise the desired technical effect of distributing the deformations generated between the belt structure, which this first layer belongs to, and the underlying carcass structure.

In an alternative preferred embodiment, wherein the reinforcing elements of the first belt layer are cords or wires parallel to one another and inclined with respect to the equatorial plane of the tyre, the reinforcing elements preferably have a density, expressed as number of cords or wires per transversal decimetre of the fabric extension (epdm), of from 40 to 120 cords or wires/dm and, more preferably, of from 50 to 100 cords or wires/dm.

Also in this case, these preferred values of the density of the cords or wires allow to optimize the desired technical effect of distributing the deformations generated between the belt structure, which this first layer belongs to, and the underlying carcass structure.

For the purposes of the invention, the non-metallic material of said cords or wires, including the weft wires and the warp wires of the aforementioned one or more fabric structures, is preferably selected from polyester, aliphatic polyamides, semi-aromatic polyamides, aromatic polyamides and cellulose material and derivatives thereof.

Advantageously, these preferred materials are capable of combining high mechanical characteristics with a low weight and a relatively low cost.

In a preferred embodiment, the elongation at break of said cords or wires made of metallic material of the first belt layer of the tyre according to the first aspect of the invention, including the weft wires and the warp wires of the aforementioned one or more fabric structures, measured according to the BISFA standards indicated above, is at least 2%, preferably at least 3%.

In a preferred embodiment, the elongation at break of said cords or wires made of non-metallic material of the first belt layer (for example polymeric and/or textile), including the weft wires and the warp wires of the aforementioned one or more fabric structures, measured according to the BISFA standards indicated above, is at least 5%, preferably at least 8%.

In this way, it is advantageously possible to manufacture the tyre avoiding damages to the cords, to the wires and/or to the layer of elastomeric material which incorporates the same during the moulding operations.

In a further preferred embodiment, the reinforcing elements of the first belt layer are oriented along a substantially circumferential direction.

In a preferred embodiment of the tyre according to the first aspect of the invention, the aforementioned reinforcing elements of the first belt layer oriented along a substantially circumferential direction comprise at least one high-elongation metallic cord.

In this preferred embodiment, the first belt layer can be made by winding a single rubber-coated reinforcing cord spirally wound on the carcass structure or a plurality of rubber-coated strips each including a plurality of reinforcing cords parallel to one another spirally wound on the carcass structure.

The Applicant has in particular verified that this preferred inclination of the reinforcing cords allows to maximise the desired technical effect of distributing the deformations generated between the belt structure, to which this first layer belongs, and the underlying carcass structure.

Within the framework of the present description and in the following claims, the term: "high-elongation metallic cord" (HE - High Elongation), means a cord that:
a. has an elongation at break equal to at least 3.5%;
   and, preferably,
b. has a part load elongation of from 1% to 3%.

The term part load elongation is meant to indicate the difference between the percent elongation achieved when subjecting the cord to a tensile force of 50 N and the percent elongation achieved when subjecting the cord to a tensile force of 2.5 N.

The characteristic "a" quoted above (high elongation at break) is calculated using the BISFA E6 method (The International Bureau For The Standardization Of Man-Made Fibres, Internationally Agreed Methods For Testing Steel Tyre Cords, 1995 edition). The characteristic "b" quoted above (high % elongation at low loads) is calculated using the BISFA E7 method (The International Bureau For The Standardization Of Man-Made Fibres, Internationally Agreed Methods For Testing Steel Tyre Cords, 1995 edition).

Within the framework of the present description and in the following claims, the term "substantially inextensible metallic cord", is meant to indicate a cord that has a very limited elongation, for example and preferably, a relative elongation less than or equal to 0.3%, more preferably less than or equal to 0.25%, at a traction load equal to 10% of the load at break.

In a preferred embodiment, the non-metallic material of the fibrillated reinforcing fibres of the first belt layer is an aromatic polyamide.

Within the framework of this preferred embodiment, it is preferred to use fibrillated reinforcing fibres in the form of aramid paste (short fibrillated fibres of poly-para-phenylene-terephthalamide), of the type commercially known as "Kevlar®-pulp" or "Twaron®-pulp" (Kevlar and Twaron are registered trademarks of Du Pont and of Akzo) suitably dispersed in the elastomeric material and preferably oriented in one or more directions inclined with respect to the equatorial plane of the tyre.

In this way, it is advantageously possible to distribute the fibrillated reinforcing fibres in the first belt layer so as to orient them preferably in the circumferential direction so as not to hamper the manufacture of the tyre during moulding and at the same time to have optimal characteristics of stress resistance along the axial direction.

In a preferred embodiment, the axial extension of the first belt layer is at least equal to the axial extension of said second belt layer.

The Applicant has verified that in this way it is advantageously possible to further increase the technical effect related to the synergistic cooperation of the aforementioned first and second belt layers in terms both of reduction of the amplitudes of the fatigue cycles at the tyre circumference, proportional to the growth rate of the fatigue cracks, and of reduction of the strains at the axially outer end portions of the reinforcing elements (usually metallic cords) of the third and of the fourth belt layer, strains proportional to the deformations imposed on the elastomeric material in contact with the axially outer end portions of these latter belt layers.

In a preferred embodiment, the first belt layer has a thickness along the radial direction of from 30% to 200%, more preferably of from 35% to 100%, of the thickness of the second belt layer.

In preferred embodiments, the first belt layer has a thickness along the radial direction of from 0.4 mm to 2.5 mm, whereas the second belt layer has a thickness along the radial direction of from 0.6 mm to 2.1 mm.

In this way, it is advantageously possible to optimise the separation between the carcass structure and the third and fourth belt layers (otherwise called "load-bearing belts") reducing the stresses which usually develop in operation between the same load-bearing belts.

As outlined above, the reinforcing elements of the lateral reinforcing layers of the second belt layer are oriented along a substantially circumferential direction, in other words they form an angle of a few degrees (for example an angle of from about 0° to 6°) with respect to the equatorial plane of the tyre.

In a preferred embodiment, these reinforcing elements of the lateral reinforcing layers of the second belt layer comprise at least one high-elongation metallic cord as defined above.

The Applicant has verified that in this way it is advantageously possible to optimise the technical effect attributable to the lateral reinforcing layers of the second belt layer, in other words that of reducing the stresses of the belt layer(s) applied at radially outer position with respect to the second belt layer, both by limiting the stresses between the various belt layers, and by absorbing part of the load that would otherwise load the radially outermost belt layer(s).

In this way and as outlined above, it is advantageously possible to reduce the amplitude of the deformation cycles in the elastomeric material adjacent to the axial ends of the belt layers as a whole, and to reduce the strain level of the reinforcing elements present in the axially outermost portions of the radially outermost layers with respect to the first two layers of the belt structure disclosed above.

In a preferred embodiment, the aforementioned at least one high-elongation metallic cord has - irrespective of the layer in which it is used (for example the first belt layer of the tyre according to the first aspect of the invention and/or the lateral reinforcing layers of the second belt layer of the tyre according to both aspects of the invention) - an nxm configuration, wherein n represents the number of strands and can be equal to 2, 3, 4 or 5, and wherein m represents the number of filaments per each strand and can be equal to 5, 6 or 7.

In this way, it is advantageously possible to make the tyre without having problems in the moulding step and having cords oriented at zero degrees capable of preserving the integrity of the tyre in operation.

In a preferred embodiment, at least a strand of the metallic cord comprises a central filament and crown filaments arranged to form a single circular crown ring about said central filament.

Preferably, the diameter of the central filament is greater than the diameter of the crown filaments by a percentage not greater than 25%.

In this way, it is advantageously possible to coat the filaments of the cords in the most complete and uniform possible manner with the elastomeric material thereby achieving a greater oxidation resistance.

In a first preferred embodiment, the aforementioned lateral reinforcing layers of the second belt layer can be made by winding a single rubber-coated reinforcing cord spirally wound on the aforementioned at least a first belt layer.

In a second alternative preferred embodiment, the aforementioned lateral reinforcing layers of the second belt layer are made by means of a single winding, on the aforementioned at least a first belt layer, of a rubber-coated strip comprising a plurality of said reinforcing elements.

In a third preferred embodiment, the aforementioned lateral reinforcing layers can be made by means of two or more windings of a single rubber-coated reinforcing cord or of a rubber-coated strip radially superimposed to each other, so as to form a structure of superimposed reinforcing elements known as "two-turn" layer.

In a preferred embodiment, the reinforcing elements of said at least a central belt layer of the second belt layer are oriented in one or more directions inclined with respect to the circumferential direction of the tyre and comprise a plurality of cords or wires made of metallic or non-metallic material.

For the purposes of the invention, preferred materials are those indicated above with reference to the reinforcing elements of the first belt layer, with the exception of the case in which the reinforcing elements consist of at least one metallic cord, in which case the latter is of the substantially inextensible type as defined above.

In a preferred embodiment, the aforementioned reinforcing cords or wires of said at least a central belt layer of the second belt layer form an angle of from 10° to 40°, more preferably, of from 15° to 25°, with respect to the equatorial plane of the tyre.

The Applicant has verified that in this way it is advantageously possible to optimise the technical effects achieved by the central belt layer, in other words, that of improving the geometry of the belt structure and that of contributing to absorb part of the load exerted on the radially outermost belt layers reducing the loads thereof and therefore the forces and the deformations induced in the rubber compounds which incorporate the reinforcing elements of the same belt layers.

Preferably, the reinforcing elements of said at least a central belt layer of the second belt layer have a density of from 30 cords/dm to 80 cords/dm, preferably of from 40 cords/dm to 65 cords/dm, measured on said two belt layers along a circumferential direction, close to the equatorial plane X-X of the tyre.

In a preferred embodiment, the axial width of the second belt layer and, more preferably, also of the first belt layer is of from 60% to 95%, more preferably, of from 65% to 85% and, still more preferably, of from 70% to 80%, of the axial width of the tread band.

The Applicant has experimentally found that an axial width of the second belt layer lower than 60% of the axial width of the tread band can have an undesired worsening effect on the wear of the tread band, whereas an axial width of the second belt layer greater than 95% of the axial width of the tread band can have an undesired worsening effect on the comfort and also on the structural integrity of the tyre.

In a further preferred embodiment, the axial width of said second belt layer is of from 80% to 90% of the axial width of the belt layer having the maximum axial width between said third or said fourth radially outermost belt layers.

The Applicant has experimentally found that an axial width of the second belt layer outside of the aforementioned range of values can have an undesired worsening effect on the comfort and/or on the structural integrity of the tyre and/or on the wear kind of the tread band.

In a preferred embodiment, the tyre according to the second aspect of the invention can further comprise a sheet of elastomeric material arranged between the first belt layer and the second belt layer.

In this way and as outlined above in relation to the tyre according to the first aspect of the invention, it is advantageously possible to separate these two belt layers reducing the forces generated in operation therebetween and related to a different orientation of the respective reinforcing elements.

In a preferred embodiment, the aforementioned at least a third belt layer is applied on the second belt layer, preferably without interposition of any further layer of elastomeric material.

In a preferred embodiment, also the aforementioned fourth belt layer is applied on the third belt layer, preferably without interposition of any further layer of elastomeric material.

In a further preferred embodiment, the belt structure can comprise a fifth belt layer incorporating reinforcing elements oriented along a direction inclined with respect to the circumferential direction at a radially outer position with respect to said fourth belt layer.

In a preferred embodiment, also the aforementioned fifth belt layer is applied on the fourth belt layer, preferably without interposition of any further layer of elastomeric material.

In a preferred embodiment, the reinforcing elements of said at least a third belt layer and/or of said fourth belt layer and/or of said fifth belt layer comprise a plurality of cords or wires made of metallic material, preferably made of steel.

The aforementioned third, fourth and fifth belt layer (the latter where present) form in particular those layers which are defined in the field as load-load-bearing belt layers (otherwise known with the terms of *"main belts"* or *"working plies"*) radially superimposed to one another and which incorporate a plurality of belt reinforcing elements, typically metallic cords as outlined above.

Preferably, the reinforcing elements of the load-bearing belt layers (third, fourth and fifth belt layer, the latter where present) consist of at least metallic cords of the substantially inextensible type as defined above.

The reinforcing elements of the load-bearing belt layers (third, fourth and fifth belt layer, the latter where present) are parallel to one another in each belt layer and intersect one another with respect to the reinforcing elements of the adjacent belt layer.

Preferably, the reinforcing elements of the load-bearing belt layers (third, fourth and fifth belt layer, the latter where present) are inclined preferably symmetrically with respect to the circumferential direction of the tyre, at an angle preferably of from 10° to 40°, preferably of from 15° to 25°.

Preferably, the reinforcing elements of the load-bearing belt layers (third, fourth and fifth belt layer, the latter where present) are typically coated with a cross-linked elastomeric material.

Preferably, the reinforcing elements of the load-bearing belt layers (third, fourth and fifth belt layer, the latter where present) have a density of from 30 cords/dm to 80 cords/dm, preferably of from 40 cords/dm to 65 cords/dm, measured on said two belt layers along a circumferential direction, close to the equatorial plane X-X of the tyre.

In a preferred embodiment, the belt structure can comprise a further belt layer incorporating reinforcing elements oriented along a direction inclined with respect to the circumferential direction at a radially outer position with respect to the load-bearing belt layers (third, fourth and fifth belt layer, the latter where present).

Advantageously, this further belt layer (known in the field by the name "stone-guard belt") acts as a protective layer against the penetration of stones and/or gravel that can become trapped in the grooves of the tread band and that can cause damage to the radially innermost belt layers or even to the carcass structure.

In a preferred embodiment, the "stone-guard" belt layer is applied on the third, fourth or fifth belt layer (the latter where present), preferably without interposition of any further layer of elastomeric material.

In a preferred embodiment, the reinforcing elements of this further belt layer are made of metallic material.

Preferably, the reinforcing elements of this further belt layer form an angle of from 10° to 40°, more preferably, of from 15° to 25°, with respect to the equatorial plane of the tyre.

The Applicant has verified that in this way it is advantageously possible to optimise the technical effects attributable to the aforementioned stone-guard belt layer, that is, those of preserving the integrity of the radially innermost belt layers and of the carcass structure.

Preferably, the reinforcing elements of this further "stone-guard" belt layer have a density of from 30 cords/dm to 80 cords/dm, preferably of from 40 cords/dm to 65 cords/dm, measured on said belt layer along a circumferential direction, close to the equatorial plane X-X of the tyre.

In a preferred embodiment, the tyre can further comprise a sheet of elastomeric material arranged between the carcass structure and the belt structure disclosed above.

In this way, it is advantageously possible to separate the carcass structure from the belt structure reducing the stresses that are generated in operation therebetween and related to a different orientation of the respective reinforcing elements.

For the purposes of the present description and of the claims that follow, except in the working examples, or where indicated otherwise, all numbers expressing amounts, quantities, percentages, and so forth, are to be understood as being preceded in all instances by the term "about". Also, all ranges include any possible combinations of the maximum and minimum values and any possible intermediate range therein, which may or may not be specifically stated herein.

### Detailed description of the currently preferred embodiments

Additional characteristics and advantages of the tyre according to the invention will be better apparent from the following description of some preferred embodiments thereof, made hereinafter for exemplifying and not limiting purposes, to be read with reference to the attached figures, in which:
- Fig. 1 is a cross sectional view of a portion of a first preferred embodiment of a tyre according to the second aspect of the present invention;
- Figs. 2 and 3 are two enlarged cross sectional views of a portion of further preferred embodiments of a tyre according to the second aspect of the present invention;
- Fig. 4 is an enlarged cross sectional view of a portion of a preferred embodiment of a tyre according to the first aspect of the present invention;
- Fig. 5 shows a grayscale graphical representation of the maximum shear strain values obtained by means of a finite element simulation (FEM), in conditions of inflation and without load applied, in a portion of a tyre according to the prior art;
- Fig. 6 shows a grayscale graphical representation of the maximum shear strain values obtained by means of a finite element simulation (FEM), in conditions of inflation and without load applied, in a portion of a tyre according to a preferred embodiment of the second aspect of the present invention;
- Fig. 7 shows a grayscale graphical representation of the maximum shear strain values obtained by means of a finite element simulation (FEM), in conditions of inflation and with load applied, in a portion of a tyre according to the prior art of Fig. 5;
- Fig. 8 shows a grayscale graphical representation of the maximum shear strain values obtained by means of a finite element simulation (FEM), in conditions of inflation and with load applied, in a portion of a tyre of Fig. 7 according to a preferred embodiment of the second aspect of the present invention;
- Fig. 9 is a graph that shows the maximum shear strain values measured at a portion of the tyre comprised between the belt layer of greater transversal dimension along the circumference of the tyre of Fig. 5 according to the prior art (solid line) and of the tyre of Fig. 6 according to a preferred embodiment of the second aspect of the present invention (dashed line);
- Fig. 10 is a graph that shows of the maximum shear strain values measured between the so-called "load-bearing" belt layers in the tyre according to the prior art of Fig. 5 (solid line) and in the tyre of Fig. 6 according to a preferred embodiment of the second aspect of the present invention (dashed line).

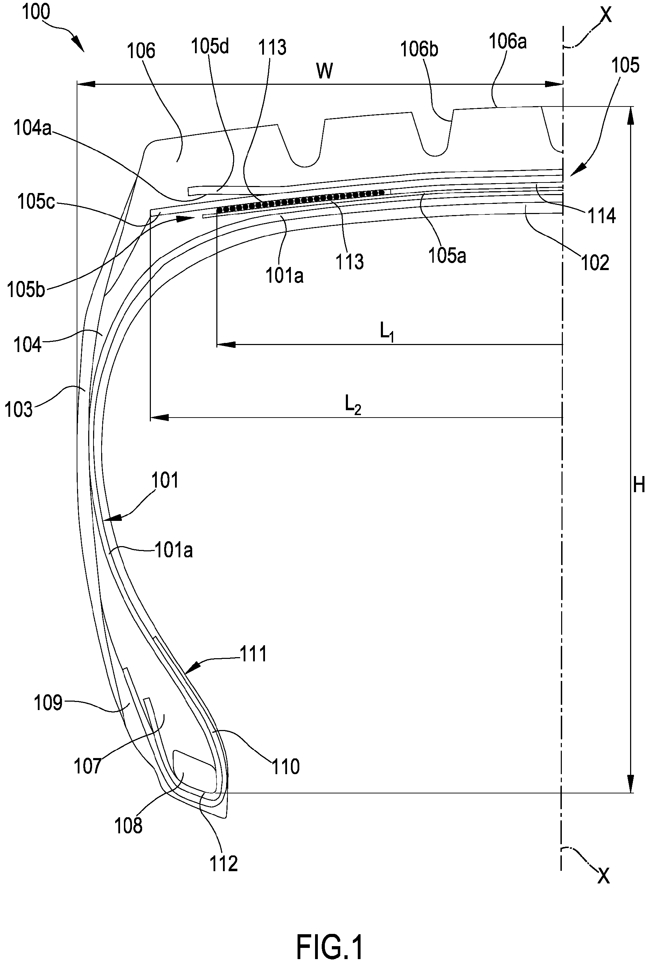

With reference to figure 1, reference numeral (100) generally indicates a tyre for vehicle wheels, in particular for light and/or heavy load vehicle wheels, such as for example trucks, buses, trailers according to a first preferred embodiment of the second aspect of the invention.

The tyre (100) is for example adapted for equipping light and/or heavy load vehicles both on directional axes and traction axes as outlined above.

In a preferred embodiment, the tyre (100) can be a "super single wide base" tyre for heavy load vehicles as defined above.

For the sake of simplicity, figure 1 illustrates only a portion of the tyre (100), the remaining unrepresented part being identical and symmetrically arranged with respect to the equatorial plane (X-X) of the tyre (100).

The tyre (100) comprises a carcass structure (101), a belt structure (105) applied at radially outer position with respect to the carcass structure (101) and a tread band (106) applied at radially outer position with respect to the belt structure (105).

The carcass structure (101) comprises at least one carcass ply (101a), the opposite lateral edges of which are associated to respective bead structures comprising at least one bead core (108).

The association between the carcass ply (101a) and the bead core (108) is achieved here by folding back the opposite lateral edges of the carcass ply (101a) around the bead core (108) so as to form the so-called folded-back carcass portion (112) as shown in figure 1.

Preferably, the space defined by each folded-back carcass portion (112) contains at least a bead filler (107), preferably consisting of a cross-linked elastomeric material, in which the bead core (108) is embedded.

In an alternative preferred embodiment, the bead core (108) can be replaced by at least one annular insert formed by rubber-coated metallic wires arranged in concentric turns (not shown in figure 1; see, for example, European patent applications EP 0 928 680 or EP 0 928 702, both in the name of the Applicant).

In this case, the carcass ply (101a) is not folded back around said at least an annular insert, the coupling being provided by a second carcass ply (not shown in figure 1) externally applied on the first ply.

The carcass ply (101a) generally consists of a plurality of reinforcing elements arranged in parallel to one another and at least partially coated with a layer of a cross-linked elastomeric material.

These reinforcing elements usually consist of steel wires twisted together, coated with a metal alloy (for example copper/zinc, zinc/manganese, zinc/molybdenum/cobalt alloys and similar) or textile yarns, for example rayon, nylon or polyethylene terephthalate.

The carcass ply (101a) is usually of the radial type, i.e. it incorporates reinforcing elements arranged in a direction substantially perpendicular with respect to a circumferential direction.

The bead core (108) is enclosed in a bead structure (111), defined along a radially inner circumferential edge of the tyre (100), with which the tyre engages on a rim (not shown in figure 1) that forms part of a vehicle wheel.

An anti-abrasive strip (109) is preferably arranged at an axially outer position with respect to the folded-back carcass portion (112).

Preferably, a reinforcing layer (110), known as "flipper", is wound around the bead core (108) and the bead filler (107) so as to at least partially surround the same.

In the case of tubeless tyres, a rubber layer (102) generally known as "liner", which provides the necessary tightness of the inflation air of the tyre, can also be foreseen at a radially inner position with respect to the carcass ply (101a).

The tyre (100) comprises a belt structure (105) applied at a radially outer position with respect to the carcass structure (101) and precisely along the circumference of the carcass ply (101a).

In the preferred embodiment of the tyre (100) illustrated in figure 1, the belt structure (105) comprises a first belt layer (105a) applied on the carcass structure (101) and incorporating reinforcing elements oriented in one or more directions.

As outlined above, the reinforcing elements of the first belt layer (105a) of the tyre according to the second aspect of the invention are selected from: cords made of non-metallic material, optionally coated by an elastomeric material; wires made of non-metallic material, optionally coated by an elastomeric material; one or more fabric structures formed by weft wires and warp wires made of non-metallic material; reinforcing fibres made of non-metallic material; and combinations thereof.

In the preferred embodiment illustrated in figure 1, the reinforcing elements of the first belt layer (105a) comprise and, more preferably, essentially consist of, a square fabric structure provided with weft wires and warp wires made of non-metallic material, preferably made of polyamide and, even more preferably, made of nylon 66.

Preferably, the weft wires and the warp wires have a multi-filament structure.

Preferably, the aforementioned weft and warp wires have a count of from 450 to 1200 dtex.

In a preferred embodiment, the weft wires and the warp wires of the aforementioned fabric structure have a density, expressed as number of wires per transversal decimetre of the fabric extension (epdm), of from 50 to 100 wires/dm.

Preferably, the aforementioned square fabric structure is oriented according to an angle of from 40° to 50°, more preferably at 45°, with respect to the equatorial plane (X-X) of the tyre (100).

In the preferred embodiment of the tyre (100) illustrated in figure 1, the belt structure (105) comprises a second belt layer (105b) applied on the first belt layer (105a) and consisting of:
i) a pair of lateral reinforcing layers (113) substantially symmetrically arranged with respect to the equatorial plane (X-X) of the tyre (100) and positioned at axially outer ends of the second belt layer (105b); and
ii) at least a central belt layer (114) axially interposed between the aforementioned pair of reinforcing layers (113) and incorporating reinforcing elements oriented in one or more directions with respect to the circumferential direction (X-X) of the tyre (100).

Preferably, the first belt layer (105a) has a thickness along the radial direction of from 30% to 200% of the thickness of the second belt layer (105b).

In preferred embodiments, the first belt layer (105a) has a thickness along the radial direction of from 0.4 mm to 2.5 mm, whereas the second belt layer (105b) has a thickness along the radial direction of from 0.6 mm to 2.1 mm.

The lateral reinforcing layers (113) incorporate reinforcing elements oriented along a substantially circumferential direction for example at an angle of about 0° with respect to the equatorial plane (X-X) of the tyre (100).

In the preferred embodiment illustrated in figure 1, the reinforcing elements of the lateral reinforcing layers (113) of the second belt layer (105b) comprise at least one high-elongation metallic cord (HE) as defined above.

In a preferred embodiment, the aforementioned at least one high-elongation metallic cord has an nxm configuration, wherein n represents the number of strands and can be equal to 2, 3, 4 or 5, and wherein m represents the number of filaments per each strand and can be equal to 5, 6 or 7.

In a preferred embodiment, the aforementioned lateral reinforcing layers (113) of the second belt layer (105b) are made by winding a rubber-coated strip comprising a plurality of said reinforcing elements, preferably a plurality of high-elongation metallic cords (HE) held together by means of a cross-linked elastomeric material.

In an alternative preferred embodiment, not illustrated in figure 1, the lateral reinforcing layers (113) can be made of two or more windings of a rubber-coated strip radially superimposed on one another.

Preferably, the reinforcing elements of the lateral reinforcing layers (113) have a density from 30 cords/dm to 80 cords/dm, preferably from 40 cords/dm to 60 cords/dm, measured on said lateral reinforcing layers (113) along a circumferential direction.

In the preferred embodiment of figure 1, the lateral reinforcing layers (113) are directly applied on the first belt layer (115a).

In the preferred embodiment of figure 1, the lateral reinforcing layers (113) have their axially outer edge axially offset towards the inside with respect to the corresponding axially outer edge of the first belt layer (105a).

In other words, in the preferred embodiment of figure 1 the axial extension of the first belt layer (105a) is greater than the axial extension of the second belt layer (105b).

Preferably, the distance between the axially outer edge of the lateral reinforcing layers (113) and the axially outer edge of the first belt layer (105a) varies from 2 mm to 30 mm, preferably from 2 mm to 15 mm.

Alternatively, the lateral reinforcing layers (113) can have their axially outer edge at the axially outer edge of the first belt layer (105a) (not shown in figure 1).

In other words, in this further preferred embodiment of the tyre (100), the axial extension of the first belt layer (105a) is equal to the axial extension of the second belt layer (105b).

In the preferred embodiment of figure 1, the central belt layer (114) of the second belt layer (105b) comprises a plurality of metallic reinforcing cords, preferably made of HT steel, substantially inextensible held together by means of a cross-linked elastomeric material.

Preferably, the reinforcing elements of the central belt layer (114) of the second belt layer (105b) form an angle of from 10° to 40°, more preferably, of from 15° to 25°, with respect to the equatorial plane (X-X) of the tyre (100).

Preferably, the reinforcing elements of the central belt layer (114) of the second belt layer (105b) have a density from 30 cords/dm to 80 cords/dm, more preferably from 40 cords/dm to 60 cords/dm, measured on said second belt layer (105b), along a circumferential direction, close to the equatorial plane (X-X) of the tyre (100).

In the preferred embodiment of the tyre (100) illustrated in figure 1, the belt structure (105) comprises a third belt layer (105c), applied at a radially outer position, preferably applied on the second belt layer (105b).

The third belt layer (105c) incorporates a plurality of reinforcing elements substantially parallel to one another and inclined with respect to the equatorial plane (X-X) of the tyre (100).

In the preferred embodiment of figure 1, the reinforcing elements of the third belt layer (105c) are metallic cords, preferably made of HT steel, substantially inextensible held together by means of a cross-linked elastomeric material.

Preferably, the reinforcing elements of the third belt layer (105c) form an angle of from 10° to 40°, more preferably, of from 15° to 25°, with respect to the equatorial plane (X-X) of the tyre (100).

Preferably, the reinforcing elements of the third belt layer (105c) have a density from 30 cords/dm to 80 cords/dm, more preferably from 40 cords/dm to 60 cords/dm, measured on said third belt layer (105c), along a circumferential direction, close to the equatorial plane (X-X) of the tyre (100).

In the preferred embodiment of the tyre (100) illustrated in figure 1, the belt structure (105) comprises a fourth belt layer (105d), applied at a radially outer position, preferably applied on the third belt layer (105c).

The fourth belt layer (105d) incorporates a plurality of reinforcing elements substantially parallel to one another and inclined with respect to the equatorial plane (X-X) of the tyre (100) in the opposite direction with respect to that of the reinforcing elements of the third belt layer (105c).

In the preferred embodiment of figure 1, the reinforcing elements of the fourth belt layer (105d) are metallic cords, preferably made of HT steel, substantially inextensible held together by means of a cross-linked elastomeric material.

Preferably, the reinforcing elements of the fourth belt layer (105d) form an angle of from 10° to 40°, more preferably, of from 15° to 25°, with respect to the equatorial plane (X-X) of the tyre (100).

Preferably, the reinforcing elements of the fourth belt layer (105d) have a density from 30 cords/dm to 80 cords/dm, more preferably from 40 cords/dm to 60 cords/dm, measured on said fourth belt layer (105d), along a circumferential direction, close to the equatorial plane (X-X) of the tyre (100).

In the preferred embodiment illustrated in figure 1, the third belt layer (105c) and the fourth belt layer (105d) form the load-bearing belt layers ("main belts") of the belt structure (105) of the tyre (100).

The tyre (100) further comprises a sidewall (103) externally applied on the carcass structure (101), this sidewall extending, at an axially outer position, from the bead structure (111) up to the radially outer end of the belt structure (105).

In the preferred embodiment of figure 1, an insert (104) comprising a cross-linked elastomeric material is arranged in a connecting area, i.e. the area where the lateral edges of the tread band (106) are connected to the sidewall (103) of the tyre (100).

Preferably, the insert (104) is arranged between the carcass ply (101a), the belt structure (105) and the sidewall (103).

In the preferred embodiment of figure 1, the tyre (100) comprises a pair of inserts (104a) comprising a cross-linked elastomeric material, substantially symmetrically arranged with respect to the equatorial plane (X-X) of the tyre (100) between the load-bearing belt layers (third belt layer (105c) and fourth belt layer (105d)).

More particularly, each insert (104a) is applied at the axially outer edge of the third (105c) and of the fourth (105d) belt layer.

As outlined above, the tread band (106), the axially opposite outer edges of which are connected to the sidewall (103), is circumferentially applied at a radially outer position with respect to the belt structure (105).

Externally, the tread band (106) is provided with a rolling surface (106a) configured to make contact with the ground.

In a way known *per se,* the tread band (106) comprises a plurality of circumferential grooves (106b) which are connected by means of transversal notches and/or slits (not shown in figure 1), so as to define a tread pattern which comprises a plurality of blocks of various shapes and sizes distributed along the extension of the tread band (106).

Figure 1 also represents the height of the cross-section (H) referring to the radial distance from the diameter of the nominal rim up to the outer diameter of the tyre (100) in its equatorial plane (X-X), as well as the width of the cross-section (W) referring to the maximum linear distance parallel to the axis of the tyre (100) and between the outside of its sidewalls (103).

In the preferred embodiment of figure 1, the axial width of the second belt layer (105b) is of from 60% to 105% of the axial width of the tread band (106).

In the preferred embodiment of figure 1, the axial width (L₁) of the second belt layer (105b) is of from 80% to 90% of the axial width (L₂) of the belt layer having the maximum axial width, in this case, of the third belt layer (105c).

In this preferred embodiment, the second belt layer (105b) thus has an axial width (L₁) which is lower than the axial width (L₂) of the third belt layer (105c), so that the axially outer edges of the second belt layer (105b) are axially offset towards the inside of a predetermined distance with respect to the corresponding axially outer edges of the third belt layer (105c).

Preferably, said predetermined distance varies from 2 mm to 100 mm, preferably from 10 mm to 80 mm.

With reference to figures 2 and 3 further preferred embodiments of the tyre (100) according to the second aspect of the invention will now be illustrated.

In the following description and in such figures, the elements of the tyre (100) functionally equivalent to those illustrated earlier with reference to the embodiment shown in figure 1 will be indicated with the same reference numbers and will not be described any further.

In the preferred embodiment illustrated in figure 2, the belt structure (105) of the tyre (100) further comprises a fifth belt layer (105e) applied at a radially outer position with respect to the fourth belt layer (105d).

The fifth belt layer (105e) is provided with reinforcing elements, preferably metal cords, arranged parallel to one another, inclined with respect to the equatorial plane (x-x) of the tyre at an angle from 10° to 70°, preferably from 12° to 40°.

In the preferred embodiment of figure 2, the reinforcing elements of the fifth belt layer (105e) are metallic cords, preferably made of HT steel, substantially inextensible held together by means of a cross-linked elastomeric material.

Preferably, the reinforcing elements of the fifth belt layer (105e) have a density from 30 cords/dm to 80 cords/dm, more preferably from 40 cords/dm to 70 cords/dm, measured on said fifth belt layer (105e), along a circumferential direction, close to the equatorial plane (X-X) of the tyre (100).

Preferably, said reinforcing elements comprise at least a preformed metallic wire (see, for example, European patent EP 1 141 477 in the name of the Applicant).

Advantageously, the fifth belt layer (105e) (known in the field by the name of "stone-guard belt") acts as a protective layer against stones or gravel possibly trapped in the grooves (106b) of the tread band (106) and that can damage the underlying belt layers (105a)-(105d) and also in some cases the carcass structure (101).

Alternatively, as disclosed earlier, the fifth belt layer (105e) can be provided with reinforcing elements oriented along a substantially circumferential direction, thus forming an angle of a few degrees (for example 0°-6°) with respect to the equatorial plane (X-X) of the tyre (100).

Preferably, the fifth belt layer (105e) has an axial width that is lower than the axial width of the load-bearing belt layers (third belt layer (105c) and fourth belt layer (105d)), so that its axially outer edge is axially offset towards the inside with respect to the axially outer edge of the third belt layer (105c) and of the fourth belt layer (105d).

In the preferred embodiment illustrated in figure 2, moreover, the lateral reinforcing layers (113) of the second belt layer (105b) incorporate two radially superimposed layers of metallic cords made of high-elongation (HE) HT steel oriented along a substantially circumferential direction, to form a structure of lateral reinforcing layers (113) known as "two-turn" layer.

In the preferred embodiment illustrated in figure 3, the belt structure (105) of the tyre (100) comprises a further sixth belt layer (105f) arranged between the fourth belt layer (105d) and the fifth belt layer (105e).

In this preferred embodiment, therefore, the tyre (100) comprises three load-bearing belt layers: the third belt layer (105c), the fourth belt layer (105d) and the sixth belt layer (105f).

In a totally analogous way to the load-bearing belt layers disclosed earlier, the sixth belt layer (105f) incorporates a plurality of reinforcing elements substantially parallel to one another and inclined with respect to the equatorial plane (X-X) of the tyre (100), in this case in the opposite direction with respect to that of the reinforcing elements of the fourth belt layer (105d).

In the preferred embodiment of figure 3, the reinforcing elements of the sixth belt layer (105f) are metallic cords, preferably made of HT steel, substantially inextensible held together by means of a cross-linked elastomeric material.

Preferably, the reinforcing elements of the sixth belt layer (105f) form an angle of from 10° to 40°, more preferably, of from 15° to 25°, with respect to the equatorial plane (X-X) of the tyre (100).

Preferably, the reinforcing elements of the sixth belt layer (105f) have a density from 30 cords/dm to 80 cords/dm, more preferably from 40 cords/dm to 60 cords/dm, measured on said sixth belt layer (105f), along a circumferential direction, close to the equatorial plane (X-X) of the tyre (100).

In the preferred embodiment illustrated in figure 3, the axial width (L₁) of the second belt layer (105b) is of from 80% and 90% of the axial width (L₃) of the belt layer having the maximum axial width, in this case, of the fourth belt layer (105d).

In this preferred embodiment, the second belt layer (105b) thus has an axial width (L₁) that is lower than the axial width (L₃) of the fourth belt layer (105d), such that the axially outer edges of the second belt layer (105b) are axially offset towards the inside of a predetermined distance with respect to the corresponding axially outer edges of the fourth belt layer (105d).

Preferably, said predetermined distance varies from 2 mm to 100 mm, preferably from 5 mm to 80 mm.

In the preferred embodiment illustrated in figure 3, moreover, the axial width (L₂) of the third belt layer (105c) is substantially equal to the axial width of the sixth belt layer (105f) and varies from 80% to 90% of the axial width (L₃) of the belt layer having the maximum axial width, in this case, of the fourth belt layer (105d).

In this preferred embodiment, therefore, the third belt layer (105c) and the sixth belt layer (105f) have an axial width (L₂) that is lower than the axial width (L₃) of the fourth belt layer (105d), so that the axially outer edges of the third (105c) and of the sixth (105f) belt layers are axially offset towards the inside of a predetermined distance with respect to the corresponding axially outer edges of the fourth belt layer (105d).

In this way, it is advantageously possible to achieve an adequate structural integrity of the tyre (100) and a good wear regularity of the tread band (106).

Preferably, said predetermined distance varies from 2 mm to 80 mm, preferably from 5 mm to 60 mm.

In the various preferred embodiments disclosed above, the tyre (100) according to the second aspect of the invention can finally comprise a sheet made of a cross-linked elastomeric material, not shown, arranged between the first belt layer (105a) and the second belt layer (105b) if desired and/or suitable as a function of the use characteristics of the tyre.

Preferably, this sheet made of a cross-linked elastomeric material extends along a surface substantially corresponding to the development surface of the first belt layer (105a).

Preferably, this sheet made of a cross-linked elastomeric material has a limited thickness along the radial direction preferably of from 0.4 mm to 2.5 mm.

With reference to figure 4, a preferred embodiment of the tyre (100) according to the first aspect of the invention will now be illustrated.

In the following description and in such a figure, the elements of the tyre (100) functionally equivalent to those illustrated earlier with reference to the embodiment shown in figures 1-3 will be indicated with the same reference numbers and will not be disclosed any further.

According to the first aspect of the invention and as better illustrated in figure 4, the belt structure (105) comprises a sheet made of a cross-linked elastomeric material (105g) arranged between the first belt layer (105a) and the second belt layer (105b).

In this case and as outlined above, the reinforcing elements of the first belt layer (105a) of the tyre according to the first aspect of the invention can be both of non-metallic material and of metallic material.

In particular, the reinforcing elements of the first belt layer (105a) of the tyre (100) according to the first aspect of the invention can preferably be selected from: cords made of non-metallic material or of metallic material, optionally coated by an elastomeric material; wires made of non-metallic material or wires made of metallic material, optionally coated by an elastomeric material; one or more fabric structures formed by weft wires and warp wires made of metallic or non-metallic material; reinforcing fibres made of non-metallic material; and combinations thereof.

For example, the reinforcing elements of the first belt layer (105a) can be cords made of metallic or non-metallic material parallel to one another and inclined with respect to the equatorial plane X-X of the tyre (100) at an angle of from 40° to 50°, more preferably, equal to about 45°.

In an alternative preferred embodiment, the reinforcing elements of the first belt layer (105a) can be oriented along a substantially circumferential direction and comprise at least one metallic cord made of high-elongation (HE) HT steel as defined above.

Preferably, the density of the cords, expressed as number of cords per transversal decimetre of the fabric extension (epdm) is of from 40 to 120 cords/dm and, more preferably, of from 50 to 100 cords/dm.

Further preferred aspects of the reinforcing elements of the first belt layer (105a) have been amply disclosed in the general part of the present disclosure which is referred to herein.

Similarly to what has been outlined above in relation to the tyre (100) illustrated in figures 1-3, the sheet made of a cross-linked elastomeric material (105g) extends along a surface substantially corresponding to the development surface of the first belt layer (105a).

Preferably, the sheet made of a cross-linked elastomeric material (105g) has a limited thickness along the radial direction preferably of from 0.4 mm to 2.5 mm.

As far as the remaining overall structure is concerned, the tyre (100) of figure 4 is analogous to the tyre disclosed above with reference to figure 2 to which reference should be made, with the exception of the configuration of the lateral reinforcing layers (113) of the second belt layer (105b) that, in this case, incorporate a single layer of metallic cords made of high-elongation (HE) HT steel oriented along a substantially circumferential direction similarly to what is illustrated in figures 1 and 3.

Purely for illustrative and not limiting purposes of the present invention, some examples are now provided discussing the results of some comparative finite element simulation tests carried out on a tyre according to the aforementioned aspects of the present invention and a tyre having a belt structure configured according to the teachings of document CN 102358110 or according to the teachings of document DE 10 2010 016 550.

### EXAMPLE 1

The Applicant has carried out a series of simulations with the finite element methodology on a comparative tyre having a belt structure configured according to the teachings of document CN 102358110 and on a tyre according to the second aspect of the invention and having a belt structure configured according to the preferred embodiment illustrated in figure 2, except for the axial width of the first belt layer (105a) which is substantially equal to that of the second belt layer (105b) and for the fact that the lateral reinforcing layers (113) of the second belt layer (105b) consist of a single layer of circumferentially oriented metallic cords.

Specifically, the tyre according to the invention had the following configuration of the layers (105a)-(105e) of the belt structure:
- first layer 105a: square fabric structure provided with weft wires and warp wires with multi-filament structure of nylon 66 embedded in a sheet of cross-linked elastomeric material; count: 1000 dtex; density: 56 wires/dm. The square fabric structure is oriented at 45° with respect to the equatorial plane of the tyre;
- second layer 105b:
   i) lateral reinforcing layers (113) incorporating cords at 0° with respect to the equatorial plane made of HT HE steel with structure 3x7x0.14; density: 53 cords/dm;
   ii) central layer (114) incorporating cords made of substantially inextensible HT steel with structure 3+6x0.35; density: 48 cords/dm inclined at an angle equal to 21° with respect to the equatorial plane of the tyre;
- third layer (105c): cords made of substantially inextensible HT steel with structure 3+6x0.35; density: 48 cords/dm inclined at an angle equal to 17° with respect to the equatorial plane of the tyre;
- fourth layer (105d): cords made of substantially inextensible HT steel with structure 3+6x0.35; density: 48 cords/dm inclined at an angle equal to 17° with respect to the equatorial plane of the tyre in the opposite direction with respect to that of the cords of the third belt layer;
- fifth layer 105e: cords made of substantially inextensible HT steel with structure 3+6x0.35; density: 48 cords/dm inclined at an angle equal to 17° with respect to the equatorial plane of the tyre in the opposite direction with respect to that of the cords of the fourth belt layer.

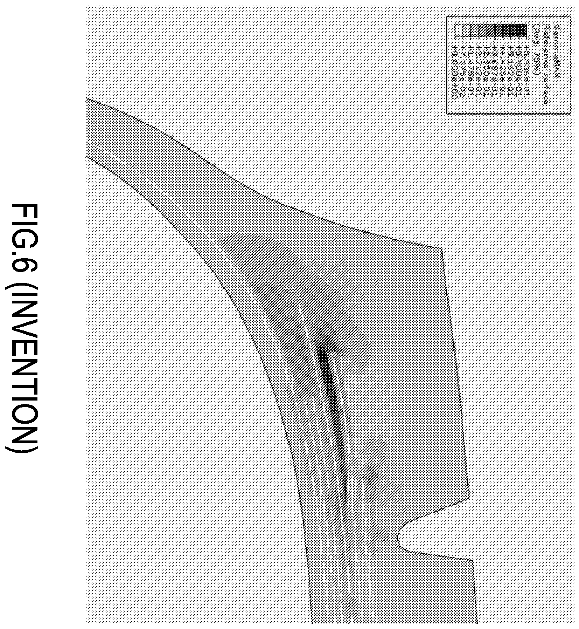

As outlined above and as visible in figures 4 and 6, which will be commented hereinafter, the belt structure of the tyre according to CN 102358110 consists of a first belt applied at a radially inner position as a transition layer, a second and a third belts sequentially arranged on the first belt, and a fourth belt arranged on the third belt.

The first belt includes two belt strips, symmetrically arranged at axially outer positions with respect to a central belt strip, and each formed by a cord fabric spirally wound according to the circumference of the tyre.

In the simulations carried out, the configuration of the comparative tyre according to CN 102358110 and the structure of the belt layers is the same as that of the tyre according to the invention, with the exception of the presence in the latter of the first layer (105a) (absent in the configuration of the belt structure of CN 102358110).

The finite element simulations were carried out to evaluate the impact on variables related to the fatigue life of the tyre, and in particular related to the integrity performance of the belt structure on a tyre size 385/65R22.5.

The simulations were carried out in nominal ETRTO conditions thus with standard pressure (9bar) and load (4500kg).

The local deformation state was thus analysed; in particular, the parameter selected as index of the strain intensity was the «maximum shear strain» (indicated as GammaMax in the attached figures 4-7) by means of a conventional finite elements calculation software (ABAQUS version 6.13.1 of HKS).

This parameter is known in the literature, and commonly used, as a parameter suitable to be correlated to the growth rate of the fatigue cracks, thus of the integrity performance of a tyre.

In figures 4-7, the captions reported in the tables generated by the aforementioned software respectively indicate the reference surface ("Reference surface") and the average ("Avg.").

The simulations carried out gave the results graphically illustrated in figures 4-9.

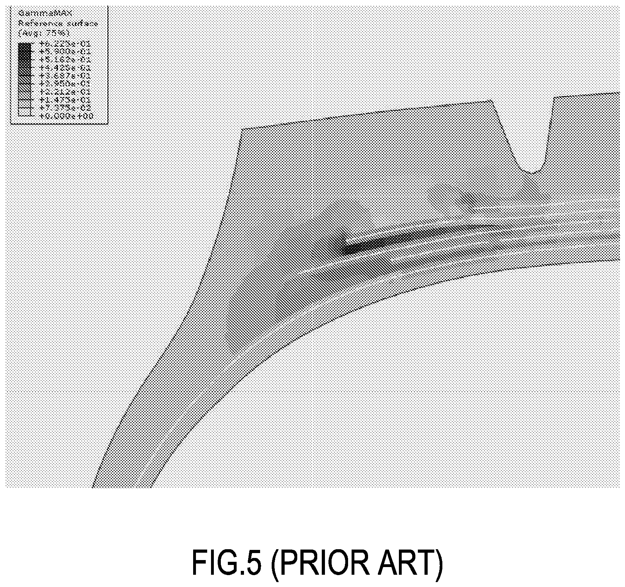

More particularly, figures 4 and 5 show a grayscale graphical representation of the maximum shear strain values (dimensionless) along the circumferential direction obtained by means of a finite element simulation (FEM) as outlined above, in conditions of inflation and without load applied, in a portion of a tyre according to the prior art and according to the invention.

In the figures, increasing grey intensities are associated to increasing values of the maximum shear strain.

As may be observed from figures 4 and 5, the tyre of the invention allows to substantially reduce the maximum shear strain values along the circumferential direction with respect to a tyre having a belt structure configured according to the teachings of CN 102358110 both in the area between the radially innermost load-bearing belt (the load-bearing belt layer having the maximum axial dimension of the belt structure) and the carcass structure, and in the area between the first belt layer and the carcass structure.

In this way, the tyre according to the invention is advantageously capable of reducing in such areas the deformations imparted to the elastomeric material reducing both the heat dissipated by hysteresis, and the possibility that cracks may be formed, thereby increasing the service life of the tyre.

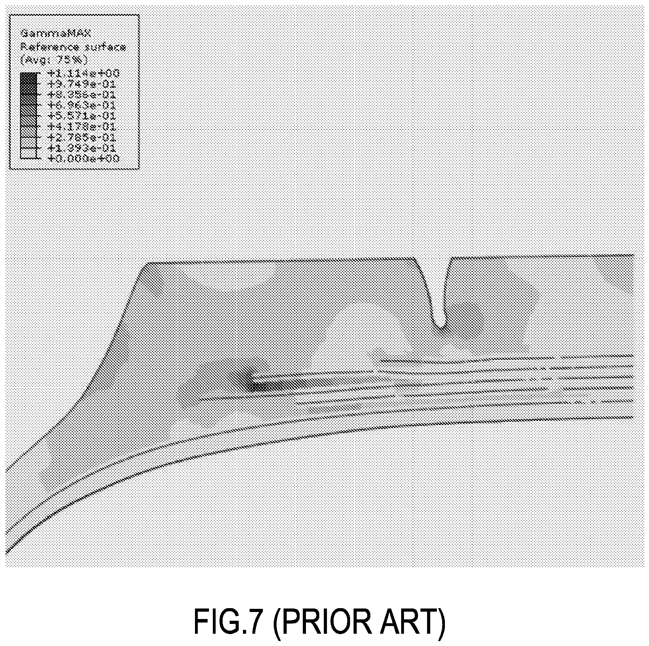

Similarly, from figures 6 and 7, which show a grayscale graphical representation of the maximum shear strain values obtained by means of a finite element simulation (FEM), in conditions of inflation and with load applied, it is possible to observe that the tyre of the invention allows to substantially reduce the maximum shear strain values along the circumferential direction in the areas identified above with respect to a tyre with a belt structure configured according to the teachings of CN 102358110, confirming the advantages outlined above.

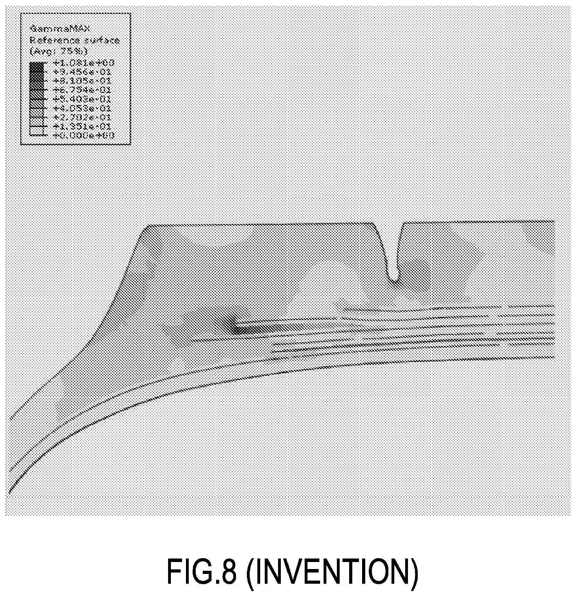

By observing figure 8, which is a graph that shows the maximum shear strain values measured at a portion of the tyre between the load-bearing belts of the third and fourth belt layer close to the axial edges thereof along the circumference of the tyre of Fig. 4 according to the prior art (solid line) and of the tyre of Fig. 5 according to a preferred embodiment of the present invention (dashed line), it is possible to appreciate that the fatigue cycle which the aforementioned area of the tyre is subjected to is substantially less pronounced in the case of the tyre according to the invention with respect to the tyre according to CN 102358110.

In particular, in the case of the tyre according to the invention the following can be observed with respect to a tyre according to CN 102358110:
i) a significant decrease (-57,9%) of the amplitude of the deformation cycles in the elastomeric material present in the area arranged between the belt layer of maximum width and the carcass structure, and
ii) a significant decrease (-58%) in the maximum shear strain value;
with a corresponding reduction both of the possibility of cracks formation, and of the propagation rate of those cracks that may have formed in such a material with a marked extension of the service life of the tyre.

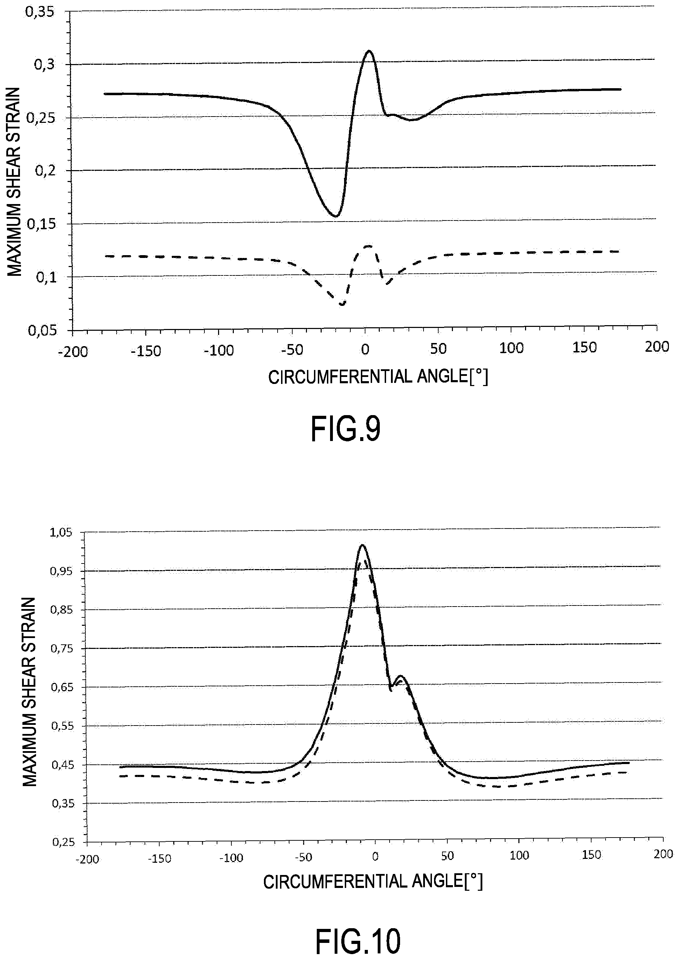

By observing figure 9, which is a graph that shows the maximum shear strain values measured between the so-called "load-bearing" belt layers in the tyre according to the prior art of Fig. 4 (solid line) and in the tyre of Fig. 5 according to the present invention (dashed line), it is possible to appreciate that the fatigue cycle which the aforementioned area of the tyre is subjected to is less demanding in the case of the tyre according to the invention with respect to the tyre according to CN 102358110 also in such an area.

### EXAMPLE 2

The Applicant has carried out a further series of simulations with the finite element methodology on a comparative tyre having a belt structure configured according to the teachings of document DE 10 2010 016 550 and on a tyre having a belt structure configured according to the first aspect of the present invention.

In particular, a comparison was made with a belt structure configuration as disclosed in paragraphs [0045]-[0047] of document DE 10 2010 016 550, with reference to figures 3 and 4, that is, a belt structure wherein the reinforcing cords of the radially outermost layers have a mutually opposite inclination with respect to the equatorial plane X-X of the tyre.

Specifically, the comparative tyre had the following configuration of the layers of the belt structure:
- first layer: steel cords inclined at an angle equal to 21° with respect to the equatorial plane X-X of the tyre (100);
- second layer:
   i) lateral reinforcing layers incorporating HE steel cords at 0° with respect to the equatorial plane;
   ii) central layer incorporating substantially inextensible HT steel cords inclined at an angle equal to 21° with respect to the equatorial plane of the tyre;
- third layer: substantially inextensible HT steel cords inclined at an angle equal to 17° with respect to the equatorial plane of the tyre;
- fourth layer: substantially inextensible HT steel cords inclined at an angle equal to 17° with respect to the equatorial plane of the tyre in the opposite direction with respect to that of the cords of the third belt layer.

Conversely, the tyre according to the invention differed from such a structure in that it incorporates a sheet of cross-linked elastomeric material arranged between the first layer and the second belt layer.

Finite elements simulations were carried out to evaluate the impact on variables related to the fatigue life of the tyre, and in particular related to the integrity performance of the belt structure on a tyre size 315/80 R22.5.

The simulations were carried out in nominal ETRTO conditions thus with standard pressure (8.5bar) and load (4000kg).

The local deformation state was thus analysed; in particular, the parameter selected as index of the strain intensity was the «maximum shear strain» by means of conventional finite elements calculation software (ABAQUS version 6.13.1 of HKS).

This parameter is known in the literature, and commonly used, as a parameter suitable to be correlated with the growth rate of the fatigue cracks, thus of the integrity performance of a tyre.

The simulations carried out gave the following results:
i) a significant decrease (at least about -10%) of the fatigue cycles of the reinforcing cords in the first and second belt layer, and
ii) a significant decrease (at least about -25%) of the maximum shear strain value,
with a corresponding reduction both of the possibility of cracks formation, and of the propagation rate of the cracks that may have formed in such a material with a marked extension of the service life of the tyre.

## Claims

1. A tyre (100) for vehicle wheels comprising:
- a carcass structure (101) comprising at least one carcass ply (101a);
- a belt structure (105) applied at a radially outer position with respect to said carcass structure (101); and
- a tread band (106) applied at a radially outer position with respect to said belt structure (105),
wherein the belt structure (105) comprises:
- a first belt layer (105a) applied at a radially outer position with respect to the carcass structure (101), said at least a first belt layer (105a) incorporating reinforcing elements oriented in one or more directions;
- a second belt layer (105b) applied on said at least a first belt layer (105a) and comprising:
i) at least a pair of lateral reinforcing layers (113) substantially symmetrically arranged with respect to the equatorial plane (X-X) of the tyre (100) and positioned at axially outer ends of said second belt layer (105b), said lateral reinforcing layers (113) incorporating reinforcing elements oriented along a substantially circumferential direction,
ii) at least a central belt layer (114) axially interposed between said at least a pair of lateral reinforcing layers (113) and incorporating reinforcing elements oriented in one or more directions;
- a sheet of elastomeric material (105g) arranged between said at least a first belt layer (105a) and said second belt layer (105b);
- at least a third belt layer (105c), applied at a radially outer position with respect to said second belt layer (105b), said at least a third belt layer (105c) incorporating a plurality of reinforcing elements substantially parallel to one another and inclined with respect to the equatorial plane (X-X) of the tyre (100); and
- at least a fourth belt layer (105d), applied at a radially outer position with respect to said third belt layer (105c), said at least a fourth belt layer (105d) incorporating reinforcing elements substantially parallel to one another and inclined with respect to the equatorial plane (X-X) of the tyre (100) along an opposite direction with respect to that of the reinforcing elements of said at least a third belt layer (105c).

2. A tyre (100) for vehicle wheels comprising:
- a carcass structure (101) comprising at least one carcass ply (101a);
- a belt structure (105) applied at a radially outer position with respect to said carcass structure (101); and
- a tread band (106) applied at a radially outer position with respect to said belt structure (105),
wherein the belt structure (105) comprises:
- a first belt layer (105a) applied at a radially outer position with respect to the carcass structure (101), said at least a first belt layer (105a) incorporating reinforcing elements, oriented in one or more directions, selected from: cords made of non-metallic material, optionally coated by an elastomeric material; wires made of non-metallic material, optionally coated by an elastomeric material; one or more fabric structures formed by wires made of non-metallic material; reinforcing fibrillated fibres made of a non-metallic material; and combinations thereof;
- a second belt layer (105b) applied on said at least a first belt layer (105a) and comprising:
i) at least a pair of lateral reinforcing layers (113) substantially symmetrically arranged with respect to the equatorial plane (X-X) of the tyre (100) and positioned at axially outer ends of said second belt layer (105b), said lateral reinforcing layers (113) incorporating reinforcing elements oriented along a substantially circumferential direction,
ii) at least a central belt layer (114) axially interposed between said at least a pair of lateral reinforcing layers (113) and incorporating reinforcing elements oriented in one or more directions;
- at least a third belt layer (105c), applied at a radially outer position with respect to said second belt layer (105b), said at least a third belt layer (105c) incorporating a plurality of reinforcing elements substantially parallel to one another and inclined with respect to the equatorial plane (X-X) of the tyre (100); and
- at least a fourth belt layer (105d), applied at a radially outer position with respect to said third belt layer (105c), said at least a fourth belt layer (105d) incorporating reinforcing elements substantially parallel to one another and inclined with respect to the equatorial plane (X-X) of the tyre (100) along an opposite direction with respect to that of the reinforcing elements of said at least a third belt layer (105c).

3. The tyre (100) according to claim 1, wherein the reinforcing elements of said at least a first belt layer (105a) are selected from: cords made of metallic or non-metallic material, optionally coated by an elastomeric material; wires made of non-metallic material or wires made of metallic material, optionally coated by an elastomeric material; one or more fabric structures formed by threads of metallic or non-metallic material; fibrillated fibres made of a non-metallic reinforcing material; and combinations thereof.

4. The tyre (100) according to claim 1, wherein the reinforcing elements of said at least a first belt layer (105a) comprise a plurality of cords or wires made of metallic or non-metallic material, substantially parallel to one another and inclined with respect to the equatorial plane (X-X) of the tyre (100).

5. The tyre (100) according to claim 2, wherein the reinforcing elements of the first belt layer (105a) comprise a plurality of cords or wires made of non-metallic material, substantially parallel to one another and inclined with respect to the equatorial plane (X-X) of the tyre (100).

6. The tyre (100) according to claim 4 or 5, wherein said cords or said wires of the first belt layer (105a) form an angle of from 20° to 60° with respect to the equatorial plane (X-X) of the tyre (100).

7. The tyre (100) according to any one of claims 2-6, wherein said cords or wires made of non-metallic material of said at least a first belt layer (105a) have a count of from 400 to 1400 dtex.

8. The tyre (100) according to any one of claims 2-7, wherein the weft wires and the warp wires of said one or more fabric structures of said at least a first belt layer (105a), each have a density, expressed as number of wires per transversal decimetre of the fabric extension (epdm), of from 40 to 120 wires/dm.

9. The tyre (100) according to any one of claims 2-8, wherein the non-metallic material of said cords or wires of the first belt layer (105a) is selected from polyester, aliphatic polyamides, semi-aromatic polyamides, aromatic polyamides and cellulose material and derivatives thereof.

10. The tyre (100) according to claims 1 and 3, wherein the elongation at break of said cords or wires made of metallic material of the first belt layer (105a) is at least 2%.

11. The tyre (100) according to any one of claims 2-9, wherein the elongation at break of said cords or wires made of non-metallic material of the first belt layer (105a) is at least 5%.

12. The tyre (100) according to any one of the preceding claims, wherein the reinforcing elements of the first belt layer (105a) are oriented along a substantially circumferential direction.

13. The tyre (100) according to claim 2 or 3, wherein the non-metallic material of said fibrillated reinforcing fibres of the first belt layer (105a) is an aromatic polyamide.

14. The tyre (100) according to any one of the preceding claims, wherein the axial extension of the first belt layer (105a) is at least equal to the axial extension of said second belt layer (105b).

15. The tyre (100) according to any one of the preceding claims, wherein the reinforcing elements of the lateral reinforcing layers (113) of the second belt layer (105b) comprise at least one high-elongation metallic cord.

## Patentansprüche

1. Reifen (100) für Fahrzeugräder, umfassend:
- eine Karkassenstruktur (101), die zumindest eine Karkassenlage (101a) umfasst;
- eine Gürtelstruktur (105), die in Bezug auf die Karkassenstruktur (101) in einer radial äußeren Position angelegt ist; und
- einen Laufflächenring (106), der in Bezug auf die Gürtelstruktur (105) in einer radial äußeren Position angelegt ist,
wobei die Gürtelstruktur (105) umfasst:
- eine erste Gürtellage (105a), die an einer radial äußeren Position in Bezug auf die Karkassenstruktur (101) angelegt ist, wobei die zumindest eine erste Gürtellage (105a) Verstärkungselemente inkorporiert, die in einer oder in mehreren Richtungen orientiert sind;
- eine zweite Gürtellage (105b), die über die zumindest eine erste Gürtellage (105a) angelegt ist und umfasst:
i) zumindest ein Paar von seitlichen Verstärkungslagen (113), die im Wesentlichen symmetrisch in Bezug auf die Äquatorialebene (X-X) des Reifens (100) angeordnet und an axial äußeren Enden der zweiten Gürtellage (105b) positioniert sind, wobei die seitlichen Verstärkungslagen (113) Verstärkungselemente inkorporieren, die im Wesentlichen entlang einer Umfangsrichtung orientiert sind,
ii) zumindest eine zentrale Gürtellage (114), die axial zwischen dem zumindest einen Paar von seitlichen Verstärkungslagen (113) angelegt ist und Verstärkungselemente inkorporiert, die in einer oder in mehreren Richtungen orientiert sind;
- eine Lage aus Elastomermaterial (105g), die zwischen der zumindest einen ersten Gürtellage (105a) und der zweiten Gürtellage (105b) angeordnet ist;
- zumindest eine dritte Gürtellage (105c), die an einer radial äußeren Position in Bezug auf die zweite Gürtellage (105b) angelegt ist, wobei die zumindest eine dritte Gürtellage (105c) eine Vielzahl von Verstärkungselementen inkorporiert, die im Wesentlichen parallel zueinander liegen und in Bezug auf die Äquatorialebene (X-X) des Reifens (100) schräg verlaufen; und
- zumindest eine vierte Gürtellage (105d), die an einer radial äußeren Position in Bezug auf die dritte Gürtellage (105c) angelegt ist, wobei die zumindest eine vierte Gürtellage (105d) Verstärkungselemente inkorporiert, die im Wesentlichen parallel zueinander liegen und in Bezug auf die Äquatorialebene (X-X) des Reifens (100) in einer in Bezug auf jene der Verstärkungselemente der zumindest einen dritten Gürtellage (105c) entgegengesetzten Richtung schräg verlaufen;

2. Reifen (100) für Fahrzeugräder, umfassend:
- eine Karkassenstruktur (101), die zumindest eine Karkassenlage (101a) umfasst;
- eine Gürtelstruktur (105), die in Bezug auf die Karkassenstruktur (101) in einer radial äußeren Position angelegt ist; und
- einen Laufflächenring (106), der in Bezug auf die Gürtelstruktur (105) in einer radial äußeren Position angelegt ist,
wobei die Gürtelstruktur (105) umfasst:
- eine erste Gürtellage (105a), die an einer radial äußeren Position in Bezug auf die Karkassenstruktur (101) angelegt ist, wobei die zumindest eine erste Gürtellage (105a) Verstärkungselemente inkorporiert, die in einer oder in mehreren Richtungen orientiert sind,
ausgewählt aus: Korden, die aus einem nicht metallischen Material hergestellt und optional mit einem Elastomermaterial beschichtet sind; Drähten, die aus einem nicht metallischen Material hergestellt und optional mit einem Elastomermaterial beschichtet sind; einer oder mehreren Gewebestrukturen, die aus Drähten gebildet sind, die aus einem nicht metallischen Material hergestellt sind; fibrillierten Verstärkungsfasern, die aus einem nicht metallischen Material hergestellt sind; und Kombinationen davon;
- eine zweite Gürtellage (105b), die über die zumindest eine erste Gürtellage (105a) angelegt ist und umfasst:
i) zumindest ein Paar von seitlichen Verstärkungslagen (113), die im Wesentlichen symmetrisch in Bezug auf die Äquatorialebene (X-X) des Reifens (100) angeordnet und an axial äußeren Enden der zweiten Gürtellage (105b) positioniert sind, wobei die seitlichen Verstärkungslagen (113) Verstärkungselemente inkorporieren, die im Wesentlichen entlang einer Umfangsrichtung orientiert sind,
ii) zumindest eine zentrale Gürtellage (114), die axial zwischen dem zumindest einen Paar von seitlichen Verstärkungslagen (113) angelegt ist und Verstärkungselemente inkorporiert, die in einer oder in mehreren Richtungen orientiert sind;
- zumindest eine dritte Gürtellage (105c), die an einer radial äußeren Position in Bezug auf die zweite Gürtellage (105b) angelegt ist, wobei die zumindest eine dritte Gürtellage (105c) eine Vielzahl von Verstärkungselementen inkorporiert, die im Wesentlichen parallel zueinander liegen und in Bezug auf die Äquatorialebene (X-X) des Reifens (100) schräg verlaufen; und
- zumindest eine vierte Gürtellage (105d), die an einer radial äußeren Position in Bezug auf die dritte Gürtellage (105c) angelegt ist, wobei die zumindest eine vierte Gürtellage (105d) Verstärkungselemente inkorporiert, die im Wesentlichen parallel zueinander liegen und in Bezug auf die Äquatorialebene (X-X) des Reifens (100) in einer in Bezug auf jene der Verstärkungselemente der zumindest einen dritten Gürtellage (105c) entgegengesetzten Richtung schräg verlaufen;

3. Reifen (100) nach Anspruch 1, wobei die Verstärkungselemente der zumindest einen ersten Gürtellage (105a) ausgewählt sind aus: Korden, die aus einem metallischen oder nicht metallischen Material hergestellt und optional mit einem Elastomermaterial beschichtet sind; Drähten, die aus einem nicht metallischen Material hergestellt sind, oder Drähte, die aus einem nicht metallischen Material hergestellt sind, und die optional mit einem Elastomermaterial beschichtet sind; einer oder mehreren Gewebestrukturen, die aus Fäden gebildet sind, die aus einem metallischen oder nicht metallischen Material hergestellt sind; fibrillierten Verstärkungsfasern, die aus einem nicht metallischen Material hergestellt sind; und Kombinationen davon.

4. Reifen (100) nach Anspruch 1, wobei die Verstärkungselemente der zumindest einen ersten Gürtellage (105a) eine Vielzahl von Korden oder Drähten umfassen, die aus einem metallischen oder nicht metallischen Material hergestellt sind, im Wesentlichen parallel zueinander liegen und in Bezug auf die Äquatorialebene (X-X) des Reifens (100) schräg verlaufen.

5. Reifen (100) nach Anspruch 2, wobei die Verstärkungselemente der ersten Gürtellage (105a) eine Vielzahl von Korden oder Drähten umfassen, die aus einem nicht metallischen Material hergestellt sind, im Wesentlichen parallel zueinander liegen und in Bezug auf die Äquatorialebene (X-X) des Reifens (100) schräg verlaufen.

6. Reifen (100) nach Anspruch 4 oder 5, wobei die Korde oder die Drähte der ersten Gürtellage (105a) einen Winkel von 20° bis 60° in Bezug auf die Äquatorialebene (X-X) des Reifens (100) bilden.

7. Reifen (100) nach einem der Ansprüche 2 bis 6, wobei die Korde oder Drähte der zumindest einen ersten Gürtellage (105a), die aus einem nicht metallischen Material hergestellt sind, eine Zählung von 400 bis 1400 dtex aufweisen.

8. Reifen (100) nach einem der Ansprüche 2 bis 7, wobei die Schussdrähte und die Kettdrähte der einen oder mehreren Gewebestrukturen der zumindest einen ersten Gürtellage (105a) jeweils eine Dichte aufweisen, die ausgedrückt als Anzahl von Drähten pro Dezimeter in der Querrichtung des Gewebeverlaufs (epdm) von 40 bis 120 Drähte/dm beträgt.

9. Reifen (100) nach einem der Ansprüche 2 bis 8, wobei das nicht metallische Material der Korde oder Drähte der ersten Gürtellage (105a) ausgewählt ist aus: Polyester, aliphatischen Polyamiden, halbaromatischen Polyamiden, aromatischen Polyamiden und Zellulosematerial sowie Derivaten davon.

10. Reifen (100) nach den Ansprüchen 1 und 3, wobei die Bruchdehnung der Korde oder Drähte der ersten Gürtellage (105a), die aus metallischem Material hergestellt sind, zumindest 2 % beträgt.

11. Reifen (100) nach einem der Ansprüche 2 bis 9, wobei die Bruchdehnung der Korde oder Drähte der ersten Gürtellage (105a), die aus nicht metallischem Material hergestellt sind, zumindest 5 % beträgt.

12. Reifen (100) nach einem der vorhergehenden Ansprüche, wobei die Verstärkungselemente der ersten Gürtellage (105a) im Wesentlichen entlang einer Umfangsrichtung orientiert sind.

13. Reifen (100) nach Anspruch 2 oder 3, wobei das nicht metallische Material der fibrillierten Verstärkungsfasern der ersten Gürtellage (105a) ein aromatisches Polyamid ist.

14. Reifen (100) nach einem der vorhergehenden Ansprüche, wobei die axiale Erstreckung der ersten Gürtellage (105a) zumindest gleich der axialen Erstreckung der zweiten Gürtellage (105b) ist.

15. Reifen (100) nach einem der vorhergehenden Ansprüche, wobei die Verstärkungselemente der seitlichen Verstärkungslagen (113) der zweiten Gürtellage (105b) zumindest einen hoch streckfesten metallischen Kord umfassen.

## Revendications

1. Pneu (100) pour roues de véhicule comprenant :
- une structure de carcasse (101) comprenant au moins un pli de carcasse (101a) ;
- une structure de ceinture (105) appliquée à une position radialement extérieure par rapport à ladite structure de carcasse (101) ; et
- une bande de roulement (106) appliquée à une position radialement extérieure par rapport à ladite structure de ceinture (105),
dans lequel la structure de ceinture (105) comprend :
- une première couche de ceinture (105a) appliquée à une position radialement extérieure par rapport à la structure de carcasse (101), ladite au moins une première couche de ceinture (105a) incorporant des éléments de renfort orientés dans une ou plusieurs direction(s) ;
- une deuxième couche de ceinture (105b) appliquée sur ladite au moins une première couche de ceinture (105a) et comprenant :
i) au moins une paire de couches de renfort latérales (113) agencées de manière essentiellement symétrique par rapport au plan équatorial (X-X) du pneu (100) et positionnées au niveau d'extrémités axialement extérieures de ladite deuxième couche de ceinture (105b), lesdites couches de renfort latérales (113) incorporant des éléments de renfort orientés le long d'une direction essentiellement circonférentielle,
ii) au moins une couche de ceinture centrale (114) interposée axialement entre ladite au moins une paire de couches de renfort latérales (113) et incorporant des éléments de renfort orientés dans une ou plusieurs direction(s) ;
- une feuille de matériau élastomère (105g) agencée entre ladite au moins une première couche de ceinture (105a) et ladite deuxième couche de ceinture (105b) ;
- au moins une troisième couche de ceinture (105c), appliquée à une position radialement extérieure par rapport à ladite deuxième couche de ceinture (105b), ladite au moins une troisième couche de ceinture (105c) incorporant une pluralité d'éléments de renfort essentiellement parallèles les uns aux autres et inclinés par rapport au plan équatorial (X-X) du pneu (100) ; et
- au moins une quatrième couche de ceinture (105d), appliquée à une position radialement extérieure par rapport à ladite troisième couche de ceinture (105c), ladite au moins une quatrième couche de ceinture (105d) incorporant des éléments de renfort essentiellement parallèles les uns aux autres et inclinés par rapport au plan équatorial (X-X) du pneu (100) le long d'une direction opposée par rapport à celle des éléments de renfort de ladite au moins une troisième couche de ceinture (105c).

2. Pneu (100) pour roues de véhicule comprenant :
- une structure de carcasse (101) comprenant au moins un pli de carcasse (101a) ;
- une structure de ceinture (105) appliquée à une position radialement extérieure par rapport à ladite structure de carcasse (101) ; et
- une bande de roulement (106) appliquée à une position radialement extérieure par rapport à ladite structure de ceinture (105),
dans lequel la structure de ceinture (105) comprend :
- une première couche de ceinture (105a) appliquée à une position radialement extérieure par rapport à la structure de carcasse (101), ladite au moins une première couche de ceinture (105a) incorporant des éléments de renfort, orientés dans une ou plusieurs direction(s), choisis parmi : des câblés réalisés en matériau non métallique, éventuellement revêtus d'un matériau élastomère ; des fils réalisés en matériau non métallique, éventuellement revêtus d'un matériau élastomère ; une ou plusieurs structure(s) en tissu formée(s) par des fils réalisés en matériau non métallique ; des fibres fibrillées de renfort réalisées en un matériau non métallique ; et des combinaisons de ceux-ci ;
- une deuxième couche de ceinture (105b) appliquée sur ladite au moins une première couche de ceinture (105a) et comprenant :
i) au moins une paire de couches de renfort latérales (113) agencées de manière essentiellement symétrique par rapport au plan équatorial (X-X) du pneu (100) et positionnées au niveau d'extrémités axialement extérieures de ladite deuxième couche de ceinture (105b), lesdites couches de renfort latérales (113) incorporant des éléments de renfort orientés le long d'une direction essentiellement circonférentielle,
ii) au moins une couche de ceinture centrale (114) axialement interposée entre ladite au moins une paire de couches de renfort latérales (113) et incorporant des éléments de renfort orientés dans une ou plusieurs direction(s);
- au moins une troisième couche de ceinture (105c), appliquée à une position radialement extérieure par rapport à ladite deuxième couche de ceinture (105b), ladite au moins une troisième couche de ceinture (105c) incorporant une pluralité d'éléments de renfort essentiellement parallèles les uns aux autres et inclinés par rapport au plan équatorial (X-X) du pneu (100) ; et
- au moins une quatrième couche de ceinture (105d), appliquée à une position radialement extérieure par rapport à ladite troisième couche de ceinture (105c), ladite au moins une quatrième couche de ceinture (105d) incorporant des éléments de renfort essentiellement parallèles les uns aux autres et inclinés par rapport au plan équatorial (X-X) du pneu (100) le long d'une direction opposée par rapport à celle des éléments de renfort de ladite au moins une troisième couche de ceinture (105c).

3. Pneu (100) selon la revendication 1, dans lequel les éléments de renfort de ladite au moins une première couche de ceinture (105a) sont choisis parmi : des câblés réalisés en matériau métallique ou non métallique, éventuellement revêtus d'un matériau élastomère ; des fils réalisés en matériau non métallique ou des fils réalisés en matériau métallique, éventuellement revêtus d'un matériau élastomère ; une ou plusieurs structures en tissu formées par des fils de matériau métallique ou non métallique ; des fibres fibrillées réalisées en un matériau de renfort non métallique ; et des combinaisons de ceux-ci.

4. Pneu (100) selon la revendication 1, dans lequel les éléments de renfort de ladite au moins une première couche de ceinture (105a) comprennent une pluralité de câblés ou de fils réalisés en matériau métallique ou non métallique, essentiellement parallèles les uns aux autres et inclinés par rapport au plan équatorial (X-X) du pneu (100) .

5. Pneu (100) selon la revendication 2, dans lequel les éléments de renfort de la première couche de ceinture (105a) comprennent une pluralité de câblés ou de fils réalisés en matériau non métallique, essentiellement parallèles les uns aux autres et inclinés par rapport au plan équatorial (X-X) du pneu (100).

6. Pneu (100) selon la revendication 4 ou 5, dans lequel lesdits câblés ou lesdits fils de la première couche de ceinture (105a) forment un angle compris entre 20° et 60° par rapport au plan équatorial (X-X) du pneu (100).

7. Pneu (100) selon l'une quelconque des revendications 2 à 6, dans lequel lesdits câblés ou fils réalisés en matériau non métallique de ladite au moins une première couche de ceinture (105a) ont un compte compris entre 400 et 1400 dtex.

8. Pneu (100) selon l'une quelconque des revendications 2 à 7, dans lequel les fils de trame et les fils de chaîne de ladite ou desdites plusieurs structure(s) en tissu de ladite au moins une première couche de ceinture (105a), ont chacun une densité, exprimée en nombre de fils par décimètre transversal de l'extension de tissu (epdm), comprise entre 40 et 120 fils/dm.

9. Pneu (100) selon l'une quelconque des revendications 2 à 8, dans lequel le matériau non métallique desdits câblés ou fils de la première couche de ceinture (105a) est choisi parmi un polyester, des polyamides aliphatiques, des polyamides semi-aromatiques, des polyamides aromatiques et un matériau cellulosique et des dérivés de celui-ci.

10. Pneu (100) selon les revendications 1 et 3, dans lequel l'allongement à la rupture desdits câblés ou fils réalisés en matériau métallique de la première couche de ceinture (105a) est d'au moins 2%.

11. Pneu (100) selon l'une quelconque des revendications 2 à 9, dans lequel l'allongement à la rupture desdits câblés ou fils réalisés en matériau non métallique de la première couche de ceinture (105a) est d'au moins 5%.

12. Pneu (100) selon l'une quelconque des revendications précédentes, dans lequel les éléments de renfort de la première couche de ceinture (105a) sont orientés le long d'une direction essentiellement circonférentielle.

13. Pneu (100) selon la revendication 2 ou 3, dans lequel le matériau non métallique desdites fibres de renfort fibrillées de la première couche de ceinture (105a) est un polyamide aromatique.

14. Pneu (100) selon l'une quelconque des revendications précédentes, dans lequel l'extension axiale de la première couche de ceinture (105a) est au moins égale à l'extension axiale de ladite deuxième couche de ceinture (105b).

15. Pneu (100) selon l'une quelconque des revendications précédentes, dans lequel les éléments de renfort des couches de renfort latérales (113) de la deuxième couche de ceinture (105b) comprennent au moins un câblé métallique à allongement élevé.
